# NEUE EUROPÄISCHE PATENTSCHRIFT

(11) **EP 2 607 121 B2**
(45) Veröffentlichungstag und Bekanntmachung des Hinweises auf die Entscheidung über den Einspruch: **08.07.2020**
(45) Hinweis auf die Patenterteilung: 23.04.2014
(21) Anmeldenummer: 11010087.2
(22) Anmeldetag: 22.12.2011
(51) Int. Cl.: B60H 1/22, F24H 3/04, F24H 9/18, H05B 3/00, H05B 3/02, H05B 3/16, H05B 3/50

(54) **Elektrische Heizvorrichtung, insbesondere für ein Kraftfahrzeug**
Electric heating device, in particular for a motor vehicle
Dispositif de chauffage électrique, en particulier pour un véhicule automobile

(43) Veröffentlichungstag der Anmeldung: 26.06.2013
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE); Morgen, Christian, 76761 Rülzheim (DE)
(74) Vertreter: Grünecker Patent- und Rechtsanwälte PartG mbB

(56) Entgegenhaltungen:
- EP-A1- 1 157 867
- EP-A1- 1 395 098
- EP-A1- 2 017 548
- EP-A1- 2 428 746
- EP-A2- 1 253 808
- EP-A2- 1 338 451
- DE-A1-102008 003 787
- DE-A1-102011 000 719
- KR-A- 20100 112 035
- KR-A- 20120 013 558

## Beschreibung

Die vorliegende Erfindung betrifft eine elektrische Heizvorrichtung, insbesondere eine elektrische Heizvorrichtung für ein Kraftfahrzeug. Die vorliegende Erfindung betrifft insbesondere solche elektrische Heizvorrichtungen, wie sie beispielsweise aus der EP 1 253 808 A2 bzw. der EP 0 901 311 A2 bekannt sind.

Bei diesen vorbekannten elektrischen Heizvorrichtungen befindet sich in einem Rahmen, der an gegenüberliegenden Seiten Öffnungen für den Durchtritt eines zu erwärmenden Mediums ausbildet, ein Schichtaufbau. Dieser Schichtaufbau umfasst Lagen von Wellrippenelementen und Wärme erzeugenden Elementen, wobei das Wärme erzeugende Element wenigstens ein PTC-Element hat. Dieses PTC-Element liegt zwischen sich parallel erstreckenden Kontaktblechen an und wird über diese Kontaktbleche bestromt. Des Weiteren hat die elektrische Heizvorrichtung ein Anschlussgehäuse, in dem wenigstens ein Verlustleistung erzeugender Leistungsschalter vorgesehen ist, dem ein außen an dem Anschlussgehäuse freiliegender Kühlkörper zugeordnet ist.

Das Anschlussgehäuse dient dabei regelmäßig dem Anschluss von ausgewählten, mitunter sämtlichen Kontaktblechen an eine Leistungsschaltung. Diese Leistungsschaltung umfasst üblicherweise eine Platine, die üblicherweise zumindest mit einem Halbleiter-Leistungsschalter versehen ist. Dieser steuert die Wärmeleistung von einem oder mehreren Wärme erzeugenden Elementen und erzeugt dabei Verlustleistung, die abgeführt werden muss. Üblicherweise erfolgt die Abfuhr der Verlustleistung, d.h. die Kühlung des Kühlkörpers über das in der elektrischen Heizvorrichtung zu erwärmende Medium. Dabei handelt es sich üblicherweise um Luft.

Die erfindungsgemäße elektrische Heizvorrichtung kann aber auch zur Erwärmung anderer Medien als Luft zum Einsatz kommen. So ist es denkbar, mit der elektrischen Heizvorrichtung ein flüssiges Medium, beispielsweise Wasser zu erwärmen. Auch kann die zu erwärmende Luft abhängig von dem Betrieb des HVAC, in den die elektrische Heizvorrichtung eingebaut ist, Luft erwärmen müssen, die Wasser mitschleppt. So ist es denkbar, dass bei einer hohen Luftfeuchtigkeit und aufgrund der Einwirkung des Kondensators in dem HVAC Wasser ausfällt, welches von der Luft mitgeschleppt wird. Auch kann Verschmutzung mit verschleppt werden.

Die in dem Anschlussgehäuse aufgenommenen Steuerkomponenten und Strom führenden Teile sollen indes vor Verschmutzung und eingetragener Feuchtigkeit geschützt werden. Andererseits wird für den Kühlkörper eine großflächige Durchtrittsöffnung durch eine das Anschlussgehäuse umgebende Gehäuseschale geschaffen, die dadurch in besonderer Weise anfällig für den Eintritt von Feuchtigkeit und Verschmutzung ist.

Eine elektrische Heizvorrichtung mit den oberbegrifflichen Merkmalen von Anspruch 1 ist aus der EP 2 017 548 A1 bekannt. Dieser Stand der Technik offenbart eine elektrische Heizvorrichtung mit einem Anschlussgehäuse, in dem eine Leiterplatte mit darauf montierten Leistungsschaltern vorgesehen ist. Die Leistungsschalter sind jeweils für sich mit einem zugeordneten Kühlkörper wärmeleitend verbunden. Die Kühlkörper durchragen die Leiterplatten und ragen in einen einen Heizblock aufnehmenden Rahmen hinein, so dass die mit dem Heizblock zu erwärmende Luft auch die Kühlkörper anstrahlt und dort abgeleitete Wärme konvektiv abführt. Zwischen dem Rahmen und dem Anschlussgehäuse sind Dichtelemente vorgesehen, durch welche die Kühlkörper dichtend hindurchgeführt sind. Die Dichtelemente wirken in Umfangsrichtung auf die länglichen Kühlkörper. Dementsprechend ist kein Durchtritt von Luftfeuchtigkeit oder Wasser zwischen dem Rahmen und dem Anschlussgehäuse entlang der Oberfläche der Kühlkörper möglich.

Der vorliegenden Erfindung liegt die Aufgabe zugrunde, eine elektrische Heizvorrichtung anzugeben, die eine effektive Kühlung eines Verlustleistung erzeugenden Leistungsschalters bei gleichzeitigem Schutz der in dem Anschlussgehäuse vorgesehenen Komponenten vor Umwelteinflüssen schafft.

Zur Lösung dieses Problems wird mit der vorliegenden Erfindung eine elektrische Heizvorrichtung mit den Merkmalen von Anspruch 1 angegeben. Diese unterscheidet sich von den gattungsbildenden Heizvorrichtungen dadurch, dass der Kühlkörper dichtend in das Anschlussgehäuse eingesetzt ist. Dementsprechend befindet sich auf Höhe der Durchtrittsöffnung für den Kühlkörper ein Dichtelement, welches einen Spalt zwischen dem Kühlkörper und den Konturen des Anschlussgehäuses überbrückt und abdichtet. Das Dichtelement kann eingelegt oder mittels Umspritzen insbesondere an einem aus Kunststoff ausgebildeten Anschlussgehäuse vorgesehen sein.

Das Dichtelement ist dabei vorzugsweise so ausgebildet, dass der Kühlkörper innerhalb einer durch das Anschlussgehäuse ausgebildeten Kühlkörpereinbringöffnung in Einbringrichtung beweglich gehalten ist. Diese Beweglichkeit des Kühlkörpers innerhalb der Kühlkörpereinbringöffnung in Einbringrichtung bringt den Vorteil mit sich, dass der Kühlkörper einem auf Seiten des Anschlussgehäuses aufgebrachten Druck in Grenzen ausweichen kann, ohne durch die Kühlkörpereinbringöffnung herausgedrückt zu werden, so dass der Kühlkörper unter Vorspannung an einen Leistungstransistor angelegt werden kann. Die Vorspannung kann durch ein separates Vorspannmittel, beispielsweise durch ein auf den Kühlkörper oder den Leistungsschalter wirkendes Federelement erzeugt werden.

Vorzugsweise wird die Vorspannung indes durch Kompression eines die Abdichtung bewirkenden Elementes bewirkt. In Abkehr von dem vorbekannten Stand der Technik geht die vorliegende Erfindung nämlich davon aus, dass der Kühlkörper üblicherweise unmittelbar an dem Anschlussgehäuse befestigt und nicht an einer Leiterplatte oder dergleichen montiert ist, welche den Leistungsschalter trägt. Der zuvor beschriebene Stand der Technik EP 1 253 808 A2 wie auch die EP 1 395 098 A1 stellt gerade mit Blick auf eine gute Wärmeleitung zwischen dem Leistungstransistor und dem Kühlkörper solche Lösungen vor.

Bei der erfindungsgemäßen elektrischen Heizvorrichtung sind vorzugsweise zumindest ausgewählte elektrische Kontaktbleche in dem Anschlussgehäuse aufgenommen und dort kontaktiert. Regelmäßig sind bevorzugt sämtliche Kontaktbleche in dem Anschlussgehäuse elektrisch angeschlossen. Auch dieser Anschluss erfolgt vorzugsweise unter vollständiger Abdichtung, so dass das Anschlussgehäuse zwar einerseits elektrische Anschlusselemente für die Kontaktbleche und den oder die Kühlkörper aufnimmt und für diese Aufnahme jeweils notwendigerweise Durchtritte von dem Schichtaufbau in das Anschlussgehäuse mit sich bringt. Allerdings sind üblicherweise sämtliche Durchtritte abgedichtet, so dass das Anschlussgehäuse insgesamt gegenüber dem Schichtaufbau und damit dem zu erwärmenden Fluid abgedichtet ist.

Der Kühlkörper ist erfindungsgemäß derart dichtend in das Anschlussgehäuse eingesetzt, dass der Innenraum des Anschlussgehäuses üblicherweise hermetisch gegenüber dem zu erwärmenden Medium, welches auch den Kühlkörper anstrahlt, abgedichtet ist. Wasser und/oder Luft können dementsprechend üblicherweise nicht in das Anschlussgehäuse durch die Kühlkörpereinbringöffnung eindringen.

Gemäß der vorliegenden Erfindung hat der Kühlkörper eine ebene Anlagefläche, an der der Leistungsschalter wärmeleitend zur Anlage gebracht werden kann. Diese Anlagefläche erstreckt sich üblicherweise rechtwinklig zur Einbringöffnung des Kühlkörpers. An dieser Anlagefläche liegt der Leistungsschalter unter Vorspannung an. Wie bereits erwähnt wird die Vorspannung üblicherweise durch die für den Kühlkörper vorgesehene Abdichtung bewirkt. Durch die Vorspannung wird dem Kühlkörper eine Gegenbewegung aufgeprägt, so dass dieser konstant unter Vorspannung an dem Leistungsschalter anliegt und dessen Verlustleistung wärmeleitend abführt. Die Beweglichkeit des Kühlkörpers innerhalb des Anschlussgehäuses ist dabei üblicherweise so gewählt, dass der Kühlkörper 5/10, vorzugsweise 7/10 mm in Einbringbewegung wandern und damit Dickentoleranzen des Leistungsschalters ausgleichen kann, ohne dass die Abdichtung verlorengeht. Als Dichtelement hierfür wird üblicherweise ein ring- oder zylinderförmiger Dichtkörper aus Elastomer, insbesondere EPDM oder Silikon zum Einsatz kommen. Diese Werkstoffe haben sich als besonders geeignet zur Aufrechterhaltung einer

Vorspannung und Dichtigkeit auch bei relativ hohen Temperaturen und über einen langen Nutzungszeitraum erwiesen.

Gemäß einer bevorzugten Weiterbildung der vorliegenden Erfindung ist in dem Anschlussgehäuse ein Dichtelement angeordnet, durch dessen Kompression der Leistungsschalter unter Vorspannung an dem Kühlkörper anliegt. Bei dieser bevorzugten Ausgestaltung ist der Leistungsschalter für sich regelmäßig fest in dem Anschlussgehäuse montiert, d.h. unbeweglich. Mit Blick auf die gewünschte Beweglichkeit des Kühlkörpers von etwa 7/10 mm hat das Anschlussgehäuse üblicherweise auf dem Umfang der Kühlkörpereinbringöffnung verteilt angeordnete Stützstellen, auf denen sich das Dichtelement abstützt. Seitlich neben den Stützstellen kann das Dichtelement bei Kompression in Richtung auf den Schichtaufbau wandern und damit der Bewegung des Kühlkörpers in Grenzen ausweichen. Mit anderen Worten ist das Dichtelement nicht vollumfänglich in der Einbringöffnung abgestützt, sondern lediglich an Stützstellen, die in Umfangsrichtung verteilt in der Einbringöffnung angeordnet sind. Hierdurch wird die Beweglichkeit des Dichtelementes zum Ausgleich der Kompressionsbewegung erhöht. Bedeutsam ist der Ausgleich von etwa 7/10 mm dadurch, dass Leistungsschalter als Halbleiterbauteile erheblichen Dickentoleranzen unterliegen. Hier besteht das besondere Problem einer hinreichenden und sorgfältigen Abdichtung auch bei den gegebenen Dickentoleranzen der Leistungsschalter.

Mit Blick auf eine möglichst einfache Befestigung des Kühlkörpers an dem Anschlussgehäuse hat dieser gemäß einer bevorzugten Weiterbildung einen Raststeg, der mit einer Rastschulter zusammenwirkt, die an dem Anschlussgehäuse vorgesehen ist. Üblicherweise befindet sich der Raststeg auf dem gesamten Außenumfang des Kühlkörpers, wobei es nicht notwendig ist, dass dieser Raststeg dort durchlaufend ausgeformt ist. Entsprechendes gilt für die Rastschultern. Diese Rastschultern sind regelmäßig vielmehr an dem inneren Ende von Rastpfosten vorgesehen, welche die Kühlkörpereinbringöffnung umfänglich umgeben und jeweils konisch geneigte Innenflächen haben, so dass die Einbringöffnung sich in Einbringrichtung hin trichterförmig verjüngt. Bei der Montage gleitet der Raststeg entlang der Innenfläche dieser Rastpfosten und drängt diese radial in Bezug auf die Kühlkörpereinbringöffnung nach außen. Schließlich passiert der Raststeg die Rastschulter und verriegelt hinter den Rastpfosten. Dadurch ist der Kühlkörper unverlierbar entgegen der Einbringrichtung gehalten. An der gegenüberliegenden Seite befindet sich üblicherweise das Dichtelement, welches an der dem Raststeg abgewandten Seite innerhalb der Einbringöffnung ebenfalls in der zuvor beschriebenen Weise vorzugsweise abgestützt ist. Das so in die Einbringöffnung eingebrachte Kühlelement ist daher zunächst vorläufig an dem Anschlussgehäuse gehalten. Danach erfolgt die Fixierung des Leistungsschalters.

Hierzu wird vorzugsweise ein Druckelement verwendet, welches auf einer dem Kühlkörper abgewandten Seite auf den Leistungsschalter wirkt. Das Druckelement ist vorzugsweise ein Kunststoffwabenelement, welches aufgrund der Kunststoffwaben eine relativ hohe Steifigkeit bei geringem Gewicht hat und darüber hinaus eine gewisse Wärmedurchlässigkeit zeigt, da zwischen den einzelnen Waben Luft bis zu der Oberseite des Leistungsschalters gelangen kann. Das Druckelement ist mit dem Anschlussgehäuse verbunden, regelmäßig verschraubt.

Beim Befestigen des Druckelementes üblicherweise durch Schrauben, die einen Befestigungsdruck auf den Leistungsschalter in Einbringrichtung des Kühlkörpers aufbringen, wird der Leistungsschalter zunächst gegen die Anlagefläche des Kühlkörpers angelegt. Bei fortschreitender Verschraubung wird der Leistungsschalter zusammen mit dem Kühlkörper in Richtung auf den Schichtaufbau gedrückt und die Dichtung komprimiert, so dass sich einerseits eine gute Anlage zwischen dem Kühlkörper und dem Leistungsschalter ergibt, andererseits aber eine Vorspannung in das Dichtelement eingeprägt wird, die auch über eine längere Nutzungsdauer der elektrischen Heizvorrichtung eine innige Anlage zwischen dem Leistungsschalter und dem Kühlkörper sicherstellt.

Die Montage wird dadurch weiter vereinfacht, dass das Druckelement auf mehrere Leistungsschalter einwirkt, so dass mehrere Leistungsschalter durch einen einzigen Montageschritt in der beschriebenen Weise wärmeleitend mit den zugehörigen Kühlkörpern verbunden wird. Dabei geht die vorliegende Erfindung insbesondere von der Fallgestaltung aus, dass zu jedem einzelnen Leistungsschalter ein separates Kühlelement vorgesehen ist, wenngleich auch die Möglichkeit besteht, für mehrere Leistungsschalter einen gemeinsamen Kühlkörper vorzusehen.

Mit Blick auf eine gute wärmeleitende Verbindung zwischen dem Leistungsschalter und dem Kühlkörper wird gemäß einer bevorzugten Weiterbildung der vorliegenden Erfindung vorgeschlagen, den Leistungsschalter auf der dem Kühlkörper abgewandten Unterseite der Leiterplatte vorzusehen. Das Druckelement kann bei dieser bevorzugten Weiterbildung an der gegenüberliegenden Seite an der Leiterplatte anliegen. Mit Blick auf einen schonenden Einbau der Leiterplatte in das Anschlussgehäuse und eine unmittelbare Übertragung des von dem Druckelemente erzeugten Anpressdrucks wird indes vorgeschlagen, das Druckelement unmittelbar gegen den Leistungsschalter anzulegen. Hierzu hat üblicherweise die Leiterplatte eine Bohrung, durch welche das von der Oberseite wirkende Druckelement bis zu der Oberseite des Leistungsschalters gelangt und dort zur Anlage gebracht wird.

Mit Blick auf eine erhöhte elektrische Sicherheit der elektrischen Heizvorrichtung wird gemäß einer weiteren bevorzugten Ausgestaltung vorgeschlagen, den Kühlkörper unter Zwischenlage einer Isolierschicht an den Leistungsschalter anzulegen. Bei dieser Isolierschicht handelt es sich vorzugsweise um eine Keramikschicht. Die Keramikschicht ist dabei vorzugsweise so ausgebildet, dass sie den Kühlkörper umfänglich überragt, wodurch eine erhöhte Kriechstrecke zwischen dem Leistungstransistor und dem Kühlkörper geschaffen wird. Es versteht sich von selbst, dass auch der überragende Rand der Isolierschicht innerhalb des Anschlussgehäuses üblicherweise nicht abgestützt und vielmehr in Einbringrichtung des Kühlkörpers beweglich ist, um bei einem Verspannen des Kühlkörpers nicht beschädigt zu werden.

Die Beweglichkeit des Kühlkörpers zum Aufbringen einer Vorspannung, durch welche der Kühlkörper gegen den Leistungsschalter gedrückt wird, ist derart ausgeformt, dass jeweils eine hinreichende Vorspannung unabhängig von der jeweils konkreten und innerhalb der Toleranz liegenden Dicke des Leistungsschalters bewirkt werden kann. Dieser liegt jeweils innerhalb der zu erwartenden Toleranzen unter Vorspannung an dem Kühlkörper an. Die Lage der Leiterplatte und auch die Lage des Leistungsschalters in Einbringrichtung des Kühlkörpers und damit in dessen ausgleichender Bewegungsrichtung ist üblicherweise fest vorgegeben. Dementsprechend bewirkt das Druckelement nicht, dass der Leistungsschalter von der Leiterplatte weg gedrückt wird. Vielmehr entlastet das Druckelement lediglich die Leiterplatte durch unmittelbares Anliegen an dem Leistungsschalter. Bei Dickentoleranzen wird lediglich der Kühlkörper unter Vorspannung nachgeführt. Das Druckelement kann neben Anlagenflächen zur Anlage an den Leistungsschalter durch eine Durchtrittsöffnung der Leiterplatte auch weitere Anlagebereiche haben, die unmittelbar an der Oberseite der Leiterplatte zur Anlage gelangen. Diese Anlagepunkt sind gegenüber den Anlagepunkten, die auf den Leistungsschalter wirken, in Einbringrichtung um die Stärke der Leiterplatte versetzt ausgeformt, so dass das Druckelement zeitgleich gegen die Oberseite der Leiterplatte und die Oberseite des Leistungsschalters angelegt werden kann.

Weitere Einzelheiten und Vorteile der vorliegenden Erfindung ergeben sich aus der nachfolgenden Beschreibung von Ausführungsbeispielen in Verbindung mit der Zeichnung. Dabei zeigt die Zeichnung sowohl den grundsätzlichen Aufbau einer elektrischen Heizvorrichtung, in welche ein Wärme abgebendes Element, das für sich allein erfindungswesentlich sein kann, eingebaut ist. In der Zeichnung zeigen:
- Figur 1: eine perspektivische Seitenansicht eines Ausführungsbeispiels einer elektrischen Heizvorrichtung für ein Kraftfahrzeug;
- Figur 2: eine perspektivische Seitenansicht in Explosionsdarstellung eines Wärme erzeugenden Elementes der in Figur 1 gezeigten elektrischen Heizvorrichtung;
- Figur 3: eine perspektivische Stirnseitenansicht des in Figur 2 gezeigten Ausführungsbeispiels;
- Figur 4: eine perspektivische Seitenansicht des in Figur 1 gezeigten Ausführungsbeispiels in einer Explosionsdarstellung der wesentlichen Bestandteile des Ausführungsbeispiels;
- Figur 5: einen Fügebereich zwischen einem Anschlussgehäuse und einem Schichtaufbau des in den Figuren 1 und 4 gezeigten Ausführungsbeispiels einer elektrischen Heizvorrichtung unter Weglassung verschiedener Elemente;
- Figur 6: eine Querschnittsdarstellung entlang der Linie VI-VI gemäß Figur 1, d.h. eine Schnittansicht durch ein Wärme erzeugendes Element nach Figur 2 auf mittlerer Höhe desselben unter Weglassung des Abschirmgehäuses;
- Figur 7: eine perspektivische Stirnseitenansicht des in Figur 1 gezeigten Ausführungsbeispiels einer elektrischen Heizvorrichtung, welche Einblick in das Anschlussgehäuse gibt und bei dem die Leiterplatte sowie der Gehäusedeckel fehlen;
- Figur 8: das in Figur 7 gezeichnete Detail VIII in vergrößerter Darstellung;
- Figur 9: eine Querschnittansicht des Anschlussgehäuses der elektrischen Heizvorrichtung nach Figur 1 auf Höhe eine Kühlkörpers;
- Figur 10: eine perspektivische Seitenansicht eines ersten Ausführungsbeispiels eines Heizstabes, welcher in der elektrischen Heizvorrichtung nach Figur 1 eingebaut sein kann;
- Figur 11: eine Querschnittsansicht entlang der Linie XI-XI gemäß der Darstellung in Figur 10;
- Figur 12: eine Seitenansicht des in Figur 10 gezeigten Ausführungsbeispiel eines Heizstabes;
- Figur 13: eine perspektivische Seitenansicht gemäß Figur 10 eines alternativen Ausführungsbeispiels eines Heizstabes;
- Figur 14: eine Querschnittsansicht entlang der Linie XIV-XIV gemäß der Darstellung in Figur 13;
- Figur 15: eine Seitenansicht des in Figur 13 gezeigten weiteren Ausführungsbeispiels eines Heizstabes;
- Figur 16: eine perspektivische Explosionsdarstellung eines zur Aufnahme von Heizstäben nach den Figuren 13 bis 15 geeigneten Rahmens;
- Figur 17: eine Schichten des geschichteten Aufbaus teilweise weglassende perspektivische Draufsicht auf den randseitigen Bereich eines weiteren Ausführungsbeispiels einer erfindungsgemäßen Heizvorrichtung und
- Figur 18: eine teilweise weggeschnittene perspektivische Seitenansicht des in Figur 17 gezeigten Ausführungsbeispiels.

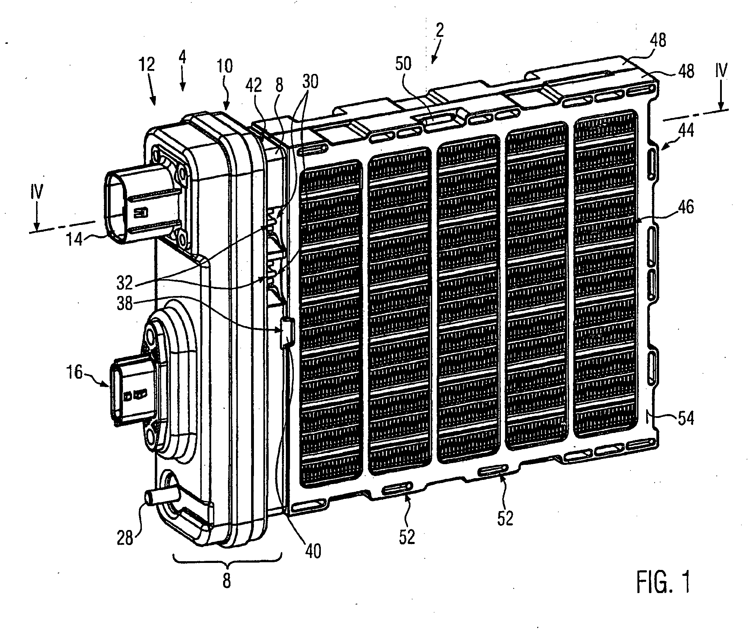

Die Figur 1 zeigt ein Ausführungsbeispiel einer elektrischen Heizvorrichtung mit einem mit Bezugszeichen 2 gekennzeichneten Leistungsteil und einem mit Bezugszeichen 4 gekennzeichneten Steuerteil. Der Leistungsteil 2 und der Steuerteil 4 bilden eine bauliche Einheit der elektrischen Heizvorrichtung.

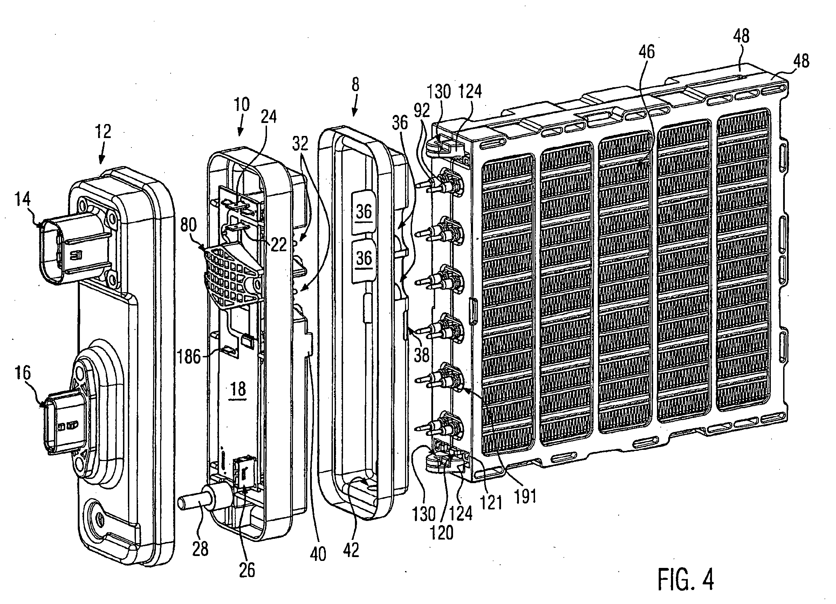

Der Steuerteil 4 wird außenseitig von einem Anschlussgehäuse 6 gebildet, welches - wie insbesondere die Darstellung gemäß Figur 4 verdeutlicht - aus einem Abschirmgehäuse 8, welches als beispielsweise tiefgezogene oder gegossene bzw. tiefgezogene Metallschale ausgeformt ist, ein Kunststoffgehäuseelement 10, welches in die Metallschale 8 eingesetzt ist, und einem Gehäusedeckel 12 besteht. Der Gehäusedeckel 12 kann im gefügten Zustand einen freien Flansch der Blechwanne 8 übergreifen und aus Metall gebildet sein, so dass das Innere des Steuerteils 4 vollständig durch ein metallisches Anschlussgehäuse 6 abgeschirmt ist. Der Gehäusedeckel 12 kann aber auch aus Kunststoff ausgebildet sein.

Der Gehäusedeckel 12 trägt ein weibliches Steckergehäuse 14 für den Leistungsstrom und ein weiteres weibliches und als Steuersteckergehäuse 16 ausgeformtes Gehäuseelement. Beide Steckergehäuse 14, 16 sind als Kunststoffelemente mit dem metallischen Gehäusedeckel 12 verbunden und bilden Führungs- und Gleitflächen für jeweils ein nicht dargestelltes männliches Steckerelement aus.

Das Kunststoffgehäuseelement 10 nimmt eine Leiterplatte 18 in sich auf, die teilweise von einem Druckelement 20 überdeckt ist, welches nachfolgend noch näher erläutert wird. Die Leiterplatte 18 wird überragt von einem Plusanschlusssteckkontakt 22 und einem Minusanschlusssteckkontakt, die in dem Leistungssteckergehäuse freiliegen und mit der Leiterbahn elektrisch verbunden sind. Die Leiterplatte 18 trägt des Weiteren ein Steuerelementkontakte enthaltendes Steuerkontaktelement 26, welches über das Steuersteckergehäuse 16 mittels Leitungen erreichbar ist. Wie aus Figur 4 ersichtlich, ist das Steuersteckergehäuse 16 versetzt zu dem Steuerkontaktelement 26 angeordnet. Dieser Abstand ist begründet durch die Einbausituation der elektrischen Heizvorrichtung in dem Kraftfahrzeug. Die elektrische Kontaktierung zwischen dem Steuerkontaktelement 26 und dem Steuersteckergehäuse 16, bzw. den dort vorgesehenen Kontaktelementen erfolgt über elektrische Leitungen, die innenseitig in dem Gehäusedeckel 12 verlegt sind. Der Gehäusedeckel wird des Weiteren im montierten Zustand überragt von einem Anschlussbolzen 28 für den Masseanschluss, der elektrisch mit dem Abschirmgehäuse 8 verbunden ist.

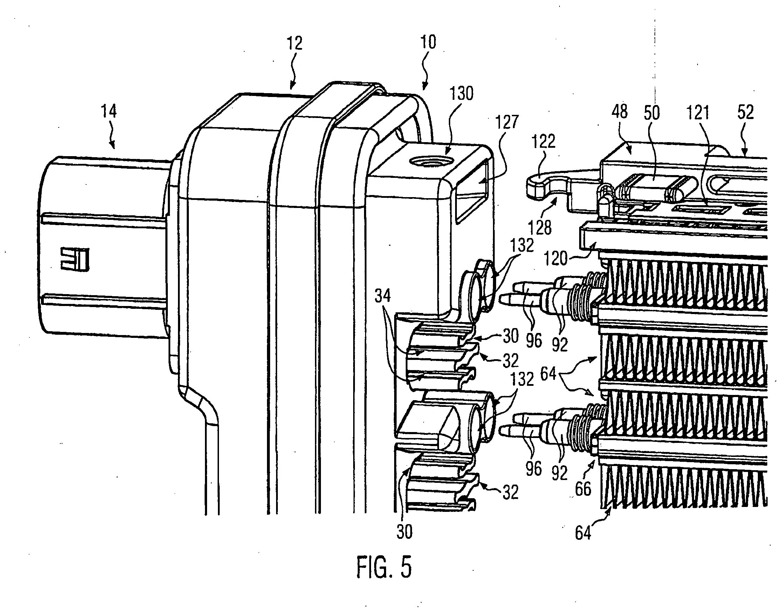

Auf der der Leiterplatte 18 gegenüberliegenden Endseite bildet das Kunststoffgehäuseelement 10 zwei Kühlkanäle 30 für Kühlkörper 32 aus, die in Figur 4 gerade noch angedeutet, indes in den Figuren 1 und 5 deutlicher zu erkennen sind. Das freie Ende der Kühlkörper 32 umfasst mehrere, sich im Wesentlichen parallel zueinander erstreckende Kühlstege, die jeweils Luftdurchtrittskanäle 34 definieren. Die Kühlkörper 32 sind aus einem gut wärmeleitfähigen Material, beispielsweise Aluminium oder Kupfer.

Die in Figur 5 nicht dargestellte, weggelassene Blechwanne hat - wie insbesondere die Figuren 1 und 4 verdeutlichen, korrespondierend zu den Kühlkanälen 30 einander gegenüberliegende Durchtrittsöffnungen 36 für Luft, die als Eintritts- und Austrittsöffnungen zu den Kühlkanälen 30 vorgesehen sind. Diese Durchtrittsöffnungen 36 sind in der Metallschale 8 herausgebildet. In etwa auf mittiger Höhe in Längsrichtung hat die Metallschale 8 Verriegelungsöffnungen 38, die nach der Endmontage des Steuerteils 4 an dem Leistungsteil 2 von Rastnasen 40 durchragt sind, welche mit dem Leistungsteil 2 formschlüssig im Eingriff und an dem äußeren Rand des Kunststoffgehäuseelementes 10 angeformt sind. Die Metallschale 8 weist ferner an gegenüberliegenden Stirnseiten jeweils Befestigungsbohrungen 42 auf, auf die nachfolgend noch näher eingegangen werden wird.

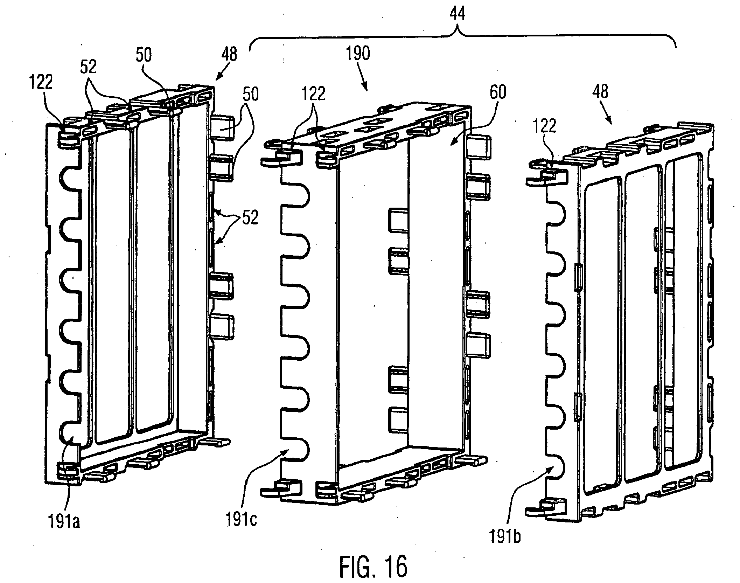

Der Leistungsteil 2 hat einen Rahmen 44, der bei dem Ausführungsbeispiel gemäß Figur 1 umfänglich geschlossen ist und einen mit Bezugszeichen 46 gekennzeichneten Schichtaufbau, der auch als Heizblock bezeichnet wird, umfänglich umgibt. Der Rahmen 44 ist gebildet aus zwei Rahmenelementen 48, die miteinander über Rastverbindungen verrastet sind, die mit Bezugszeichen 50 (männliches Rastelement) und Bezugszeichen 52 (weibliches Rastelement), insbesondere in Figur 16 gekennzeichnet sind.

Der Rahmen 44 bildet an gegenüberliegenden Außenseiten 54 jeweils Öffnungen 56 für den Durchtritt von zu erwärmender Luft des in dem Ausführungsbeispiel gezeigten Luftheizers aus. Diese Öffnungen 56 sind bei dem gezeigten Ausführungsbeispiel durch Querstreben 58 versteift, die gegenüberliegende Seitenränder des Rahmens 44 miteinander verbinden.

Der Rahmen 44 definiert in seinem Inneren einen Aufnahmeraum 60, der derart angepasst ist, dass der Schichtaufbau 46 in dem Rahmen 44 eng eingepasst aufgenommen werden kann.

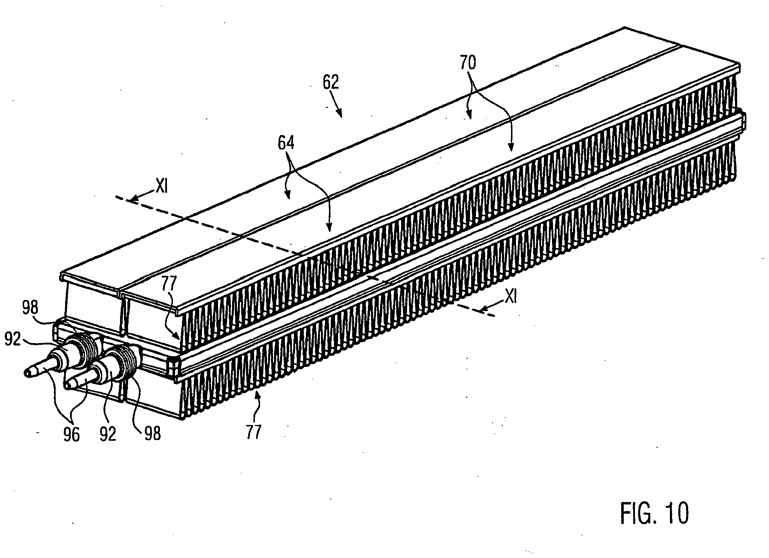

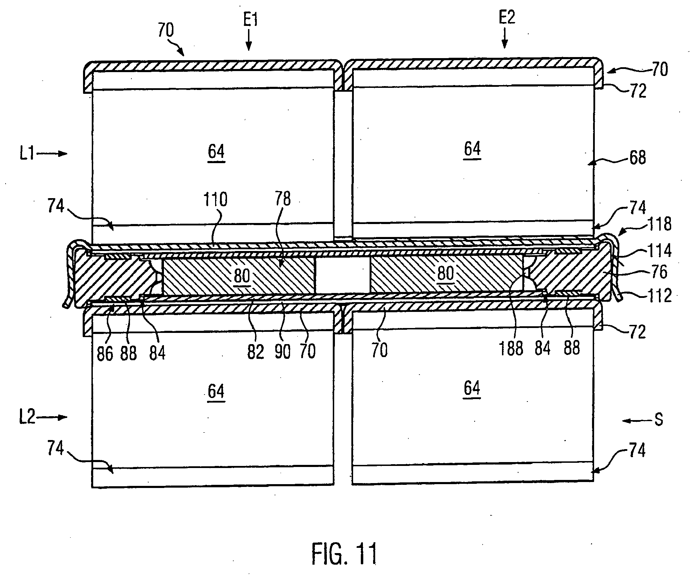

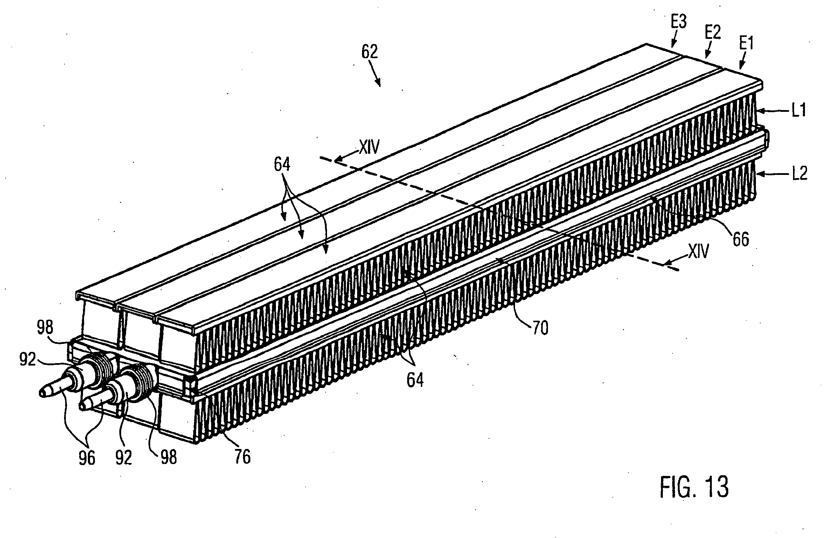

Der Heizblock bzw. Schichtaufbau 46 ist im Wesentlichen aus den in den Figuren 10 und 13 gezeigten Heizstäben 62 gebildet, die übereinander geschichtet in der Aufnahme 60 angeordnet sind. Die Heizstäbe 62 bestehen aus zumindest zwei Wellrippenelementen 64, die zwischen sich ein Wärme erzeugendes Element 66 in sich aufnehmen. Wie die Figuren 10 und 11 verdeutlichen, bestehen die Wellrippenelemente aus mäandrierend gebogenen Blechstreifen 68, die einseitig von einer Blechabdeckung 70 abgedeckt und auch randseitig über einen umbogenen Rand 72 der Blechabdeckung 70 gefasst sind. Die jeweils andere Oberseite der mäandrierend gebogenen Blechstreifen 68 ist frei und wird von umbogenen freien Enden 74 des Blechsteifens 68 direkt ausgeformt. Bei dem in den Figuren 10 und 11 gezeigten Heizstab 62 sind in Durchtrittrichtung der zu erwärmenden Luft, d. h. rechtwinklig zu der von den Außenseiten 54 aufgespannten Fläche des Rahmens 44 zwei Wellrippenelemente 64 jeweils nebeneinander vorgesehen. Diese Anordnung von in Durchströmungsrichtung hintereinander vorgesehenen Wellrippenelementen 64 bildet eine Lage aus. Dabei ist in jeder mit Bezugszeichen L gekennzeichneten Lage jeweils ein Wellrippenelement 64 pro Ebene E vorgesehen. Mit S ist die Strömungsrichtung des zu erwärmenden Luftstroms in Figur 11 eingezeichnet. Dieser trifft danach zunächst auf die erste Ebene E1, d. h. die in der ersten Ebene vorgesehenen Wellrippenelemente 64 der ersten Lage L1 und der zweiten Lage L2 und erst danach auf die in der zweiten Ebene E2 vorgesehenen Wellrippenelemente 64. Die Wellrippenelemente 64 sind dabei in Strömungsrichtung S, d.h. rechtwinklig zu der die Öffnung 56 definierenden Außenseite 54 streng hintereinander angeordnet. Dabei bildet das Wärme erzeugende Element 66 eine ebene Anlagefläche für die Wellrippenelemente 64.

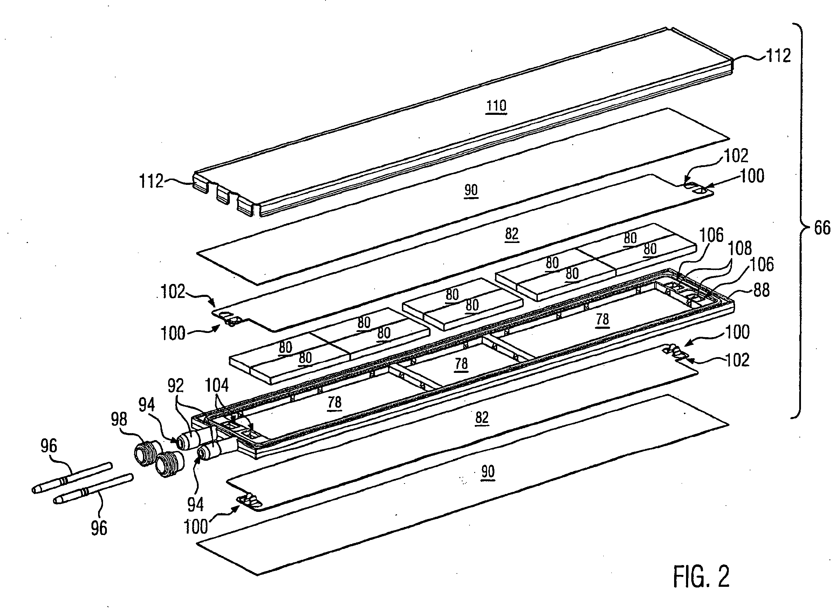

Wie insbesondere Figur 2 verdeutlicht, besteht das Wärme erzeugende Element 66 aus mehreren übereinanderliegenden Schichten. Das Wärme erzeugende Element 66 ist im Wesentlichen symmetrisch aufgebaut, wobei in der Mitte ein mit Bezugszeichen 76 gekennzeichneter Positionsrahmen aus einem elektrisch isolierenden Material, insbesondere Kunststoff vorgesehen ist. Der Positionsrahmen 76 bildet vorliegend drei Aufnahmen 78 für PTC-Elemente 80 aus. In einer Aufnahme 78 sind mehrere, zumindest zwei PTC-Elemente 80 aufgenommen. Die beiden äußeren Aufnahmen 78 nehmen jeweils vier PTC-Elemente 80 auf. An gegenüberliegenden Seiten der PTC-Elemente 80 liegen Kontaktbleche 82 an. Diese beiden Kontaktbleche 82 sind identisch ausgebildet und aus gestanztem elektrisch leitendem Blech ausgeformt. Die Kontaktbleche 82 sind als separate Elemente auf die PTC-Elemente 80 aufgelegt. Diese können zusätzlich mit einer aufgedampften Elektrodenschicht versehen sein, wie dies allgemein üblich ist. Die Elektrodenschicht ist indes nicht Kontaktblech 82 im Sinne der Erfindung.

Wie insbesondere Figur 11 verdeutlicht, liegt das einer Ebene E1 zugeordnete PTC-Element 80 innerhalb der Vorder- und Rückseiten der zugeordneten Wellrippenelemente 64. Mit anderen Worten befindet sich zwischen zwei in einer Lage L1 vorgesehenen Wellrippenelementen 64 kein PTC-Element 80. Dadurch wird eine thermische Wechselwirkung zwischen den PTC-Elementen unterschiedlicher Ebenen E1, E2 vermieden.

Die Kontaktbleche 82 sind so dimensioniert, dass diese zwar innerhalb des Positionsrahmens 76 aufgenommen, jedoch umfänglich mit Abstand zu dem Positionsrahmen 76 angeordnet sind. Der insofern gebildete Umfangsspalt ist in Figur 11 mit Bezugszeichen 84 gekennzeichnet. In etwa auf Höhe der Kontaktbleche 82 bildet der Positionsrahmen 76 eine umlaufende Dichtnut 86 aus, in welche ein elastomerer Kleberand 88 als Ringwulst eingefüllt ist. Dieser Kleberand 88 umgibt sämtliche Aufnahmen 78 voll umfänglich und dient der Verklebung einer mit Bezugszeichen 90 gekennzeichneten Isolierlage, die vorliegend aus einer isolierenden Kunststofffolie gebildet ist und welche bis zu einem Randbereich des Positionsrahmen 76 reicht, jedenfalls in Umfangsrichtung jeweils den Kleberand 88 mit Übermaß überragt. Durch die Verbindung der Isolierlage 90 mit dem Positionsrahmen 76 vermittelt durch den Kleberand 88 ist die Aufnahme 78 sowie die Kontaktbleche 82 hermetisch gegenüber dem Außenumfang versiegelt.

Zugang zu dem Inneren des Positionsrahmen 76 geben allein an einer Stirnseite des Positionsrahmens 76 und durch dessen Material einteilig daran ausgebildete Anschlussstutzen 92, die einen Kanal 94 zu Aufnahme von stiftförmigen Kontaktelementen 96 voll umfänglich umgeben. An ihrem freien Ende tragen die Anschlussstutzen 92 aus einem thermoplastischen Elastomer oder PTFE gebildete Dichtelemente 98 mit labyrinthartiger Dichtstruktur, die durch Umspritzen oder Aufstecken mit dem zugehörigen Anschlussstutzen 92 verbunden sein können. An der Stirnseite jedes Positionsrahmens 76 sind zwei Anschlussstutzen 92 mit identischer Ausgestaltung und Abdichtung vorgesehen zur Aufnahme von zwei Kontaktstiften 96 zur elektrischen Kontaktierung der Kontaktbleche 82.

Wie weiterhin Figur 2 zu entnehmen ist, haben die Kontaktbleche 82 dazu mittels Stanzen und Biegen hergestellte weibliche Clipselementaufnahmen 100, die an seitlich versetzten Vorsprüngen 102 des Kontaktblechs 82 ausgeformt sind, welche Vorsprünge 102 innerhalb der durch den Kleberand 88 gegebenen Umrandung enden und jeweils zugeordnete und durch den Positionsrahmen 76 ausgeformte Clipsöffnungen 104, 106 überdecken. In den den Anschlussstutzen 92 gegenüberliegend an dem Positionsrahmen 76 ausgeformten Clipsöffnungen 106 sind durch das Material des Positionsrahmens 76 einteilig daran ausgeformte Clipsstege 108 vorgesehen. Die Ausgestaltung und der Durchmesser dieser Clipsstege 108 entsprechen dem Durchmesser eines Kontaktstiftes 96. Die Kontaktstifte 96 liegen in den Clipsöffnungen 104 frei und sind mit den weiblichen Clipsetementaufnahmen 100 der Kontaktbleche 82 verbunden, wohingegen an der gegenüberliegenden Seite die weiblichen Clipselementaufnahmen 100 in die Clipsöffnungen 106 hineinragen und mit den Clipsstegen 108 verrastet sind. An der die Anschlussstutzen 92 aufweisenden Anschlussseite des Wärme erzeugenden Elementes 66 können die beschriebenen Clipsverbindungen entweder durch Positionieren der Kontaktbleche 82 in ihrer Einbaulage und nachfolgendes Einschieben der Kontaktstifte 96 durch die Kanäle 94 oder durch Verrasten der weiblichen Clipselementaufnahmen 100 mit den bereits in Position befindlichen Kontaktstiften 96 verwirklicht werden.

Auf seiner in Figur 2 gezeigten Oberseite ist das Wärme erzeugende Element 66 mit einer Blechabdeckung 110 versehen. Diese Blechabdeckung 110 überdeckt die gesamte, der Blechabdeckung 110 zugeordnete Isolierlage 90 und hat einen umlaufenden Rand 112, der an einer umlaufenden Randfläche 114 des Positionsrahmens 76 kraftschlüssig anliegt und dementsprechend die Blechabdeckung 110 durch Vorspannkraft an dem Positionsrahmen 76 sichert (vgl. auch Fig. 11). Des Weiteren ist durch den Rand 112 eine genaue Positionierung der Blechabdeckung 110 relativ zu dem Außenumfang des Positionsrahmens gewährleistet. Die Blechabdeckung 110 hat an dem freien Ende des Randes 112 eine leichte konische Verbreiterung, die als trichterförmige Einbringöffnung für den Positionsrahmen wirkt. Der umlaufende Rand 112 ist lediglich in den Eckbereichen und auf Höhe der Anschlussstutzen 92 durchbrochen und bildet eine einseitige Abschirmung für das Wärme erzeugende Element 66.

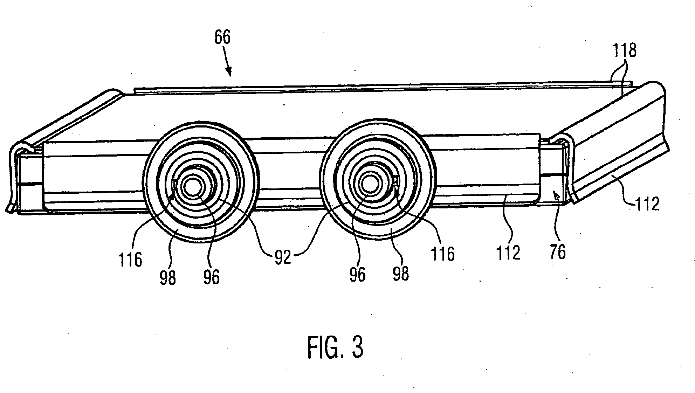

Wie Figur 3 verdeutlicht, sind die passend zu den Kontaktstiften 96 ausgebildeten Kanäle 94 radial zur Ausbildung eines nutförmigen Prüfkanals 116 verbreitert. Dieser Prüfkanal 116 erstreckt sich von der vorderen freien Stirnseite der Anschlussstutzen 92 bis zu der zugeordneten Clipsöffnung 104 und bildet dementsprechend einen äußeren Zugang zu den Aufnahmen 78, die unterhalb der Isolierlage 90 bzw. den Kontaktblechen 82 miteinander kommunizieren.

Wie Figur 3 des Weiteren verdeutlicht, bildet die Blechabdeckung 110 zwischen den leicht nach oben umbogenen Ansatzbereichen 118 für den umlaufenden Rand 112 eine ebene Anlagefläche aus. Diese Ansatzbereiche 118 bilden dementsprechend eine Art Zentrierung für die an der Blechabdeckung 110 anliegenden Wellrippenelemente 64 (vgl. auch Figur 11).

Der zuvor beschriebene Schichtaufbau 46 ist bei dem gezeigten Ausführungsbeispiel unter Federvorspannung in dem Rahmen 44 gehalten. Hierzu weist der Rahmen 44 durch die beiden Rahmenelemente 48 ausgebildete Federeinbringöffnungen 120 aus, die in den Figuren 4 und 5 zu erkennen sind und bei noch nicht montiertem Zuheizer an der steuerseitigen Stirnseite des Leistungsteils 2 freiliegen. In diese Federeinbringöffnungen 120 sind verspannbare Federelemente 121 eingebracht, die in der auf die Anmelderin zurückgehenden EP 2 298 582 beschrieben sind und ihren Offenbarungsgehalt durch diesen Verweis in die Offenbarung der vorliegenden Anmeldung aufgenommen wird. Unmittelbar benachbart zu diesen Federeinbringöffnungen 120 bildet jedes der Rahmenelemente 48 jeweils ein Halteelementteil 122 aus. Jeder durch ein Rahmenelement 48 gebildete Halteelementteil 122 ist mit einer schrägen Rampenfläche 124 versehen. Die Halteelementteile 122 sind so ausgebildet, dass bei gefügtem Rahmen 44 zwei einem Rahmenelement 48 jeweils zugeordnete Halteelementteile 122 an gegenüberliegenden Endseiten mit den Rahmenelementteilen 122 des anderen Rahmenelementes 48 vollständige Halteelemente 126 ausformen. Diese Halteelemente 126 haben eine zum freien Ende hin zulaufende Ausgestaltung, so dass die schrägen Rampenflächen 124 zur groben Positionierung des Steuerteils 4, namentlich einer Positionieröffnung 127 des Kunststoffgehäuseelementes 10 relativ zu dem Leistungsteil 2 dienen (vgl. Fig. 5). Des Weiteren bilden an den Halteelementteilen 122 quer abgehende Nuten 128 nach dem Fügen der Rahmenelemente 48 eine umfänglich geschlossene Bohrung 130 aus (vgl. Fig. 4). In diese Bohrung 130 ist durch die Befestigungsbohrung 42 der Metallschale 8 eine Befestigungsschraube einbringbar, um die Positionierung und Fixierung des Leistungsteils 2 an dem Steuerteil 4 zur Verwirklichung einer baulichen Einheit von Leistungsteil 2 und Steuerteil 4 zu bewirken.

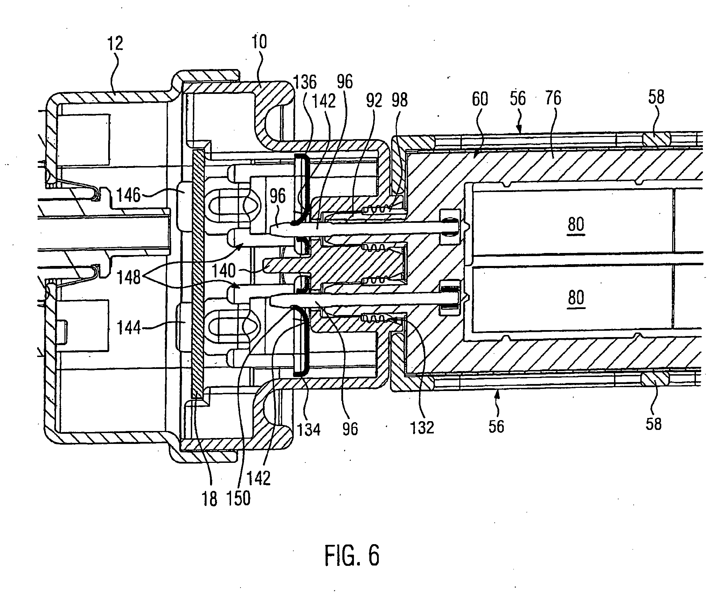

Wie die Figuren 5 und 6 verdeutlichen, bildet das Kunststoffgehäuseelement 10 zu jedem Wärme erzeugenden Element 66 zwei zylindrische Stutzenaufnahmen 132 aus, welche derart angepasst sind, dass die Anschlussstutzen 42 zusammen mit den Dichtelementen 98 jeweils in zugeordnete Stutzenaufnahmen 132 dichtend eingebracht werden können. Wie Figur 6 verdeutlicht, sind die Stutzenaufnahmen 132 endseitig konisch verbreitert und haben zunächst einen verbreiterten Zylinderabschnitt zur Aufnahme des Dichtelementes 98 und einen sich weiter innen befindlichen Zylinderabschnitt mit kleinerem Durchmesser, der mit geringem Spiel den vorne konisch zulaufenden Anschlussstutzen 92 hält und damit die Verformung des Dichtelementes 98 nach der Montage begrenzt.

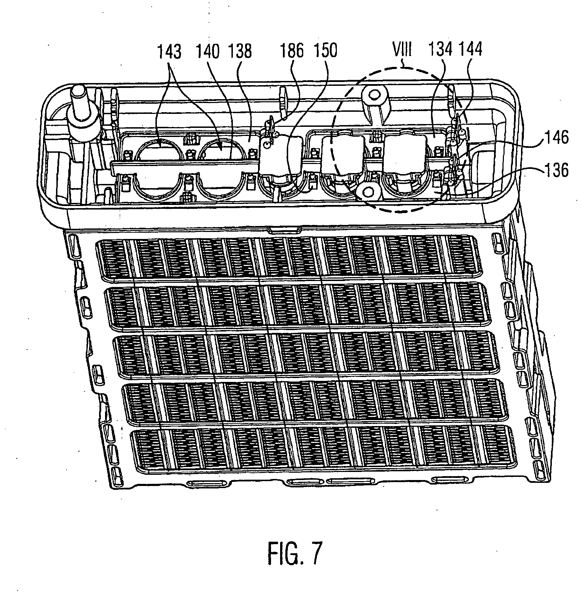

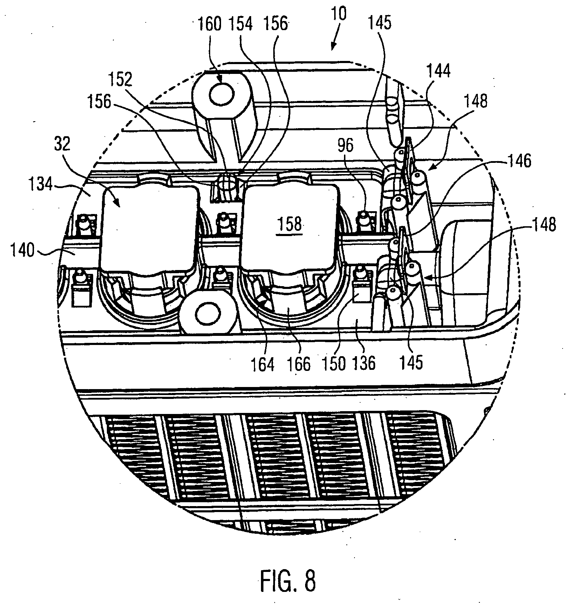

Die Kontaktstifte 96 durchsetzen jeweils Kontaktflächenelemente 134, die durch Stanzen und Biegen aus Blechen geformt sind und innerhalb des Anschlussgehäuses 6 mehrere Kontaktstifte 96 gleicher Polarität gruppieren, so dass diese einer Heizstufe zugeordnet sind. Das in Figur 6 untere Kontaktflächenelement ist ein erstes Plus-Kontaktflächenelement 134, wohingegen das obere Kontaktflächenelement ein Minus-Kontaktflächenelement 136 ist. Wie insbesondere Figur 7 verdeutlicht, nimmt das Kunststoffgehäuseelement 10 ein weiteres, zweites Plus-Kontaktflächenelement 138 auf. Das Minus-Kontaktflächenelement 136 und die Plus-Kontaktflächenelemente 134, 138 sind voneinander über einen Trennsteg 140 getrennt. Dieser Trennsteg 140 überragt eine durch das Kunststoffgehäuseelement 10 ausgeformte Anlageebene für die Kontaktflächenelemente 134, 136, 138. Diese Anlageebene vorgebende Oberflächen des Kunststoffgehäuseelementes 10 sind in Figur 6 mit Bezugszeichen 142 gekennzeichnet. Durch den Steg 140 wird die Kriechstromstrecke zwischen den Kontaktflächenelementen 134, 138 der Plus-Polarität und dem Kontaktflächenelement 136 der Minus-Polarität verlängert, so dass Kriechströme zwischen beiden Kontakten nicht zu befürchten sind. Auch wird die Luftstrecke zwischen den Kontaktflächenelementen 134 und 136 bzw. 138 und 136 verlegt. Die Kontaktflächenelemente 134, 136, 138 haben zwischen den Kontaktstiften 96 sich zu dem Trennsteg 140 öffnende halbkreisförmige Aussparungen 143. In Figur 6 sind jeweils Kontaktzungen 144, 146 zu erkennen, welche die Leiterplatte 18 durchragen und einteilig durch Stanzen und Biegen an den Kontaktflächenelementen 134 und 136 ausgeformt sind und welche in Kontaktzungenhaltebereichen 148 erhaben relativ zu den Anlageflächen 142 gehalten sind. Die Figur 8 lässt Details insofern erkennen. Wie dort verdeutlicht, haben die jeweiligen Kontaktflächenelemente 134, 136 endseitige Verbindungslaschen 145, die in die Kontaktzungen 144, 146 münden. Wie weiterhin aus den Figuren 6 und 8 ersichtlich, haben die Kontaktflächenelemente 134, 136, 138 für die einzelnen Kontaktstifte 96 ausgeformte Kontaktöffnungen, die durch Stanzen und Biegen hergestellt sind. Dementsprechend legen sich aneinander gegenüberliegende Kontaktvorsprünge 150 unter elastischer Dehnung an den Außenumfang der Kontaktstifte 96 an. Wie weiterhin aus Figur 8 ersichtlich, bildet das Kunststoffgehäuseelement 10 Verriegelungsvorsprünge 152 aus, die in Verriegelungsöffnungen 154 der Kontaktflächenelemente 134, 136, 138 eingebracht sind, die an gegenüberliegenden Seiten von scharfkantigen Klemmsegmenten 156 des die Kontaktflächenelemente 134, 136, 138 bildenden Blechmaterials begrenzt sind. Diese Klemmsegmente 156 verkrallen sich dementsprechend an den Verriegelungsvorsprüngen 152 und legen die Kontaktflächenelemente 134, 136, 138 nach dem Aufschieben auf die Verriegelungsvorsprünge fest.

Die Figur 8 zeigt ferner die bereits zuvor beschriebenen Kühlkörper 32, die innerhalb des Kunststoffgehäuseelementes 10 freiliegen und mit einer ebenen Anlagefläche 158 den Trennsteg 140 oberseitig überragen.

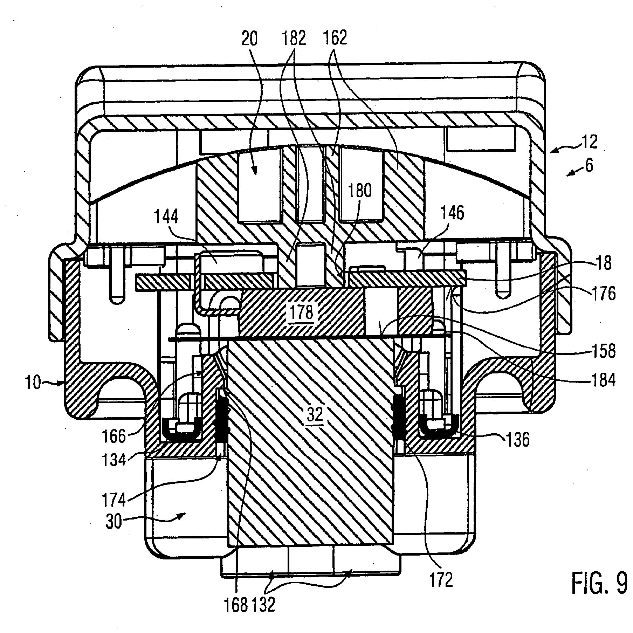

Mittig zwischen den Kühlkörpern 32 und am Rand des Kunststoffgehäuseelementes 10 sind jeweils Befestigungsaugen 160 für das zuvor bereits allgemein eingeführte Druckelement 20 zu erkennen. Wie insbesondere die Figuren 4 und 9 verdeutlichen, ist dieses wabenförmig mit einer Vielzahl von sich rechtwinklig erstreckenden Wabenstegen 162 ausgebildet.

Die Schnittansicht gemäß Figur 9 verdeutlicht den Einbau des Kühlkörpers 32 in das Kunststoffgehäuseelement 10. Dieses hat - wie Figur 8 erkennen lässt - eine Vielzahl von auf dem Umfang einer erhabenen Kühlkörpereinbringöffnung 164 des Kunststoffgehäuseelementes 10 verteilt vorgesehene Rastpfosten 166, die die Kühlkörpereinbringöffnung 164 randseitig konisch verengen und Rastschultern 168 ausformen, welche einen an dem Kühlkörper 32 angeformten umlaufenden Raststeg 170 übergreifen und damit formschlüssig gegen Herausdrücken nach oben und in Richtung auf das Anschlussgehäuse 6 verhindern. Die Kontur der Aussparungen 143 der Kontaktflächenelemente 134, 136, 138 entspricht der Kontur der Kühlkörpereinbringöffnung 164, so dass deren erhabener Rand eng von den Kontaktflächenelementen 134, 136, 138 begrenzt wird. Die beiden Plus-Kontaktflächenelemente 134, 138 sind identisch ausgeformt, so dass sie wahlweise für die Ausbildung des ersten oder des zweiten Kontaktflächenelementes 134 oder 138 verwendet werden können. Auf der der Rastschulter 168 gegenüberliegenden Seite des Raststeges 170 befindet sich ein Dichtelement 172, welches den Kühlkörper 32 umfänglich umgibt und auf der dem Raststeg 170 abgewandten Unterseite in Umfangsrichtung durch in Figur 9 nicht zu erkennende Stege abgestützt ist, so dass das Dichtelement 72 nicht in Richtung auf den Leistungsteil 2 durch eine mit Bezugszeichen 174 gekennzeichnete Abdichtaufnahme hindurchrutschen kann. Diese Abdichtaufnahme 174 wird einstückig durch das Kunststoffgehäuseelement 10 ausgeformt und verlängert die Kühlkörpereinbringöffnung 164.

In Figur 9 ist das Dichtelement in einer nur wenig komprimierten Ausgestaltung gezeigt. Das Dichtelement 172 ist indes in Längsrichtung der Abdichtaufnahme 174 komprimierbar derart, dass die Abdichtung zwischen der Innenumfangsfläche der zylindrischen Abdichtaufnahme 174 und der Außenumfangsfläche des Kühlkörpers 32 verloren geht. Das Dichtelement 172 kann dabei durch Wandern des Raststeges 170 in Längserstreckung der Abdichtaufnahme 174 um etwa 2/10 bis 7/10 mm komprimiert werden. Die Ausgleichsbewegung wird aufgebracht durch Verschrauben des Druckelementes 20 an den Befestigungsaugen 160 nach Montage der Leiterplatte 18, die auf ihrer dem Kühlkörper 32 zugewandten Unterseite 176 mit zwei Halbleiter-Leistungsschaltern 178 versehen ist. Jeder Leistungsschalter 178 liegt auf der ebenen Anlagefläche 158 des zugeordneten Kühlkörpers 32. Auf Höhe des Leistungsschalters 178 hat die Leiterplatte jeweils eine Bohrung 180, welche von Druckstegen 182 des Druckelementes 20 durchragt ist. Diese Druckstege 182 liegen unmittelbar gegen den Leistungsschalter 178 an und drücken diesen gegen den Kühlkörper 32. Da der Leistungsschalter 178 herstellungsbedingt erhebliche Dickentoleranzen haben kann, erlaubt das bei dem Ausführungsbeispiel vorgesehene Dichtelement 172 einen Ausgleich durch Zurückweichen des Kühlkörpers 32 in Richtung auf den Leistungsteil 2 ohne dass die Abdichtung des Kühlkörpers 32 in dem Kunststoffgehäuseelement 10 verloren geht. Wie sich aus der Gesamtschau, insbesondere der Figuren 4 und 9 ergibt, wirkt dabei das Druckelement 20 nach Verschrauben gegen das Kunststoffgehäuseelement 10 auf beide Leistungsschalter 176 und drückt diese jeweils gegen den ihnen zugeordneten Kühlkörper 32. Durch eine auf die Anlagefläche 158 des Kühlkörpers 32 aufgelegte Isolierschicht 184 ist der Leistungsschalter 178 indes von dem zugeordneten Kühlkörper 32 elektrisch isoliert. Bei der Isolierschicht 174 handelt es sich um eine keramische Isolierschicht. Auch diese Isolierschicht 184 überragt den Kühlkörper 32 zur Vergrößerung der Kriechstrecke erheblich in Breitenrichtung (vgl. Figur 9).

Über die Kontaktzungen 144, 146 sind die Kontaktflächenelemente 134, 136 mit der Leiterplatte 18 kontaktiert. Eine zweite, von dem zweiten Kontaktflächenelement 138 abragende Plus-Kontaktzunge 186 (vgl. Figur 4) verbindet den durch das zweite Plus-Kontaktflächenelement 138 und das Minus-Kontaktflächenelement 136 gebildeten Heizkreis mit der Platine 18 (vgl. Figur 4). Wie des Weiteren Figur 9 erkennen lässt, kontaktiert der Halbleiter-Leistungsschalter 178 mit der Leiterplatte 18 und schaltet den Leistungsstrom auf den zugehörigen Schaltkreis. Vorliegend sind zwei Heizstufen realisiert, die jeweils über einen der Halbleiter-Leistungsschalter 178 geschaltet und gesteuert werden können.

### Abgedichteter Kühlkörper

Wie bereits zuvor beschrieben, ist auch der Kühlkörper 32 abgedichtet in der Kühlkörpereinbringöffnung 164 gehalten. Dabei zeigt das Ausführungsbeispiel, konkret Figur 9, eine Situation, bei welcher der Leistungsschalter 178 innerhalb des denkbaren Toleranzbereiches die geringste Dicke hat. In diesem Fall liegen die Raststege 170 unmittelbar unterhalb der Rastschultern 168. Eine Berührung findet indes nicht statt, so dass die durch die wenn auch nur geringfügige Kompression des Dichtelementes 172 bewirkte Kompressionskraft auf die Phasengrenze zwischen dem Kühlkörper 32 und dem Leistungsschalter 178 wirkt. Dieser Leistungsschalter 178 ist unabhängig von der Dickentoleranz jeweils an der Unterseite 176 gegen die Leiterplatte 18 angelegt. Das Druckelement 20 entlastet mit seinen Druckstegen 82 lediglich die Leiterplatte 18, so dass der Leistungsschalter 178 nicht über die Leiterplatte 18, sondern lediglich zwischen dem Druckelement 20 und dem die Vorspannung bewirkenden Kühlkörper 32 unter Zwischenlage der Isolierschicht 184 geklemmt gehalten ist.

Dementsprechend ändert sich die Lage des Leistungsschalter 178 und der Leiterplatte 18 sowie des Druckelementes 20 bei einem Leistungsschalter 178 mit größerer Stärke nicht. Vielmehr wird der Kühlkörper 32 in der Kühlkörpereinbringöffnung 164 in Richtung auf das Leistungsteil 2 gedrängt, so dass das Dichtelement 172 unter Beibehaltung der Abdichtung des Kühlkörpers 32 stärker komprimiert und - gegenüber der Darstellung in Figur 9-die Raststege 170 in einer weiter abgesenkten Lage, d.h. weiter beabstandet von den Rastschultern 168 angeordnet sind.

### Definierte Anlagestellen für das PTC-Element; Luft- und Kriechstrecke

Das in den Figuren gezeigte Ausführungsbeispiel einer elektrischen Heizvorrichtung hat Wärme erzeugende Elemente, die in besonderer Weise ausgebildet sind, um Kriechstrecken zu verlängern und das Risiko einer Kriechstromübertragung zu vermindern. Diese besondere Gestaltung wird nachfolgend insbesondere unter Bezugnahme auf die Figuren 2 und 11 verdeutlicht. So hat - wie in Figur 2 zu erkennen - jede durch eine im Grunde ebene Innenumfangsfläche des Positionsrahmens 76 vorgegebene Aufnahme 78 an sich gegenüberliegenden Seiten zumindest zwei mit Bezugszeichen 188 gekennzeichneten Vorsprünge 188 definieren innerhalb der Aufnahme 78 Stützstellen für jeweils ein PTC-Element 80. Durch diese Stützstellen 188 wird verhindert, dass die PTC-Elemente 80 unmittelbar an der die Aufnahme 78 vorgebenden glatten Innenwandung des Positionsrahmens 76 anliegen. Somit wird die Kriechstrecke von gegenüberliegenden Oberflächen der PTC-Elemente 80 vergrößert.

Wie insbesondere Figur 2 erkennen lässt, sind die Stützstellen 188 im Wesentlichen pyramidenförmig ausgeformt und haben danach eine spitz zulaufende Ausbildung. Des Weiteren sind die Oberflächen der Stützstellen 188 - wie die Schnittansicht gemäß Figur 11 verdeutlicht - konkav gekrümmt. Auch durch die Krümmung der Oberfläche wird die Kriechstrecke weiter vergrößert. Der bereits zuvor erwähnte und zwischen den Kontaktblechen 82 und dem Positionsrahmen vorgesehene Umfangsspalt 84 trägt ebenfalls zur Vergrößerung der Kriechstrecken bei.

### Besonderer EMV-Schutz des Ausführungsbeispiels

Des Weiteren sind die Wärme erzeugenden Elemente 66 in besonderer Weise EMVgeschützt. So wird der Positionsrahmen 176 im Grunde vollumfänglich von einer Abschirmung umgeben, die einerseits durch die Blechabdeckung 110 des Positionsrahmens 76 und andererseits durch die Blechabdeckung 70 der Wellrippenelemente 64 gebildet sind. Wie Figur 11 verdeutlicht, verbleibt lediglich ein kleiner randseitiger Spalt zwischen den verschiedenen Abdeckungen 70, 110. Ansonsten sind die PTC-Elemente 80 vollständig von einer metallischen Abschirmung umschlossen. Dementsprechend können die Wärme erzeugenden Elemente 66 keine substanzielle elektromagnetische Strahlung abgeben.

Sämtliche Wellrippenelemente 64 sind des Weiteren über an der Metallschale 8 angeformte Rastelemente miteinander verbunden, die in der Zeichnung nicht dargestellt sind, indes so ausgebildet sein können, wie dies die auf die Anmelderin zurückgehende EP 2 299 201 A1 beschreibt, deren Offenbarung insofern in den Offenbarungsgehalt dieser Anmeldung aufgenommen wird. Es kommt lediglich darauf an, dass die Metallschale 8 elektrisch damit verbundene Vorsprünge ausformt, die mit den Wellrippenelemente 64 kontaktieren derart, dass sämtliche Wellrippenelemente 64 mittelbar oder unmittelbar mit der Metallschale 8 elektrisch verbunden und auf Masse gelegt sind.

### Dichtigkeit und Dichtprüfung

Das zuvor diskutiere Ausführungsbeispiel hat Wärme erzeugende Elemente 66, deren Aufnahme 78 hermetisch gegenüber der Umgebung abgedichtet ist, so dass Feuchtigkeit und Verschmutzung nicht zu den PTC-Elementen 80 gelangen kann. Dadurch ist eine hohe Isolation der PTC-Elemente 80 geschaffen, da eventuelle Ladungsträger die Isolation der PTC-Elemente 80, die in die Aufnahme 78 beim Stand der Technik gelangen können, die Isolation beeinträchtigen. Mit der vorliegenden Erfindung sind ferner sämtliche Wärme erzeugenden Elemente 66 dichtend in das Anschlussgehäuse 6 eingesetzt. Üblicherweise wird zur Überprüfung der notwendigen Dichtigkeit nach dem Fügen des Leistungsteils 2 an das Kunststoffgehäuseelement 10 an dessen freien, üblicherweise von dem Gehäusedeckel 12 verschlossenen Ende eine Prüfglocke aufgesetzt, die dichtend an den freien Rand des Kunststoffgehäuseelementes 10 angelegt wird. Über diese Prüfglocke wird der daran angeschlossene Teil der elektrischen Heizvorrichtung unter erhöhtem hydrostatischen Druck gesetzt, beispielsweise durch komprimierte Luft. Es wird ein gewisses Druckniveau gehalten und geprüft, ob dieses durch eventuelle Undichtigkeiten über die Zeit vermindert wird. Sollte dies nicht der Fall sein, wird das Bauteil als gut gewertet.

### Vereinfachte Montage

Dementsprechend wird bei der Herstellung des gezeigten Ausführungsbeispiels zunächst das Leistungsteil 2 separat hergestellt. Zunächst werden die Wärme erzeugenden Elemente 66 montiert. Dabei kann die Blechabdeckung 110 die Unterseite und damit jedenfalls nach dem Aufkleben der der Blechabdeckung 110 zugeordneten Isolierlage 90 den einseitig offenen Positionsrahmen 76 unterseitig verschließen, so dass von der anderen Seite die PTC-Elemente 80 eingelegt und danach das zugeordnete Kontaktblech 82 auf diese aufgelegt werden kann, um schließlich hierauf die Isolierlage 90 aufzulegen und über den Kleberand 88 gegenüber dem Positionsrahmen 76 abzudichten. In der insbesondere unter Bezugnahme auf Figur 11 beschriebenen Weise werden die so vorbereiteten Wärme erzeugenden Elemente 66 in ein Rahmenelement 48 des Rahmens 44 eingelegt, und zwar jeweils alternierend zu der Anordnung von Wellrippenelementen 64. Wie sich insbesondere aus Figur 4 ergibt, liegen üblicherweise zwischen zwei Wärme erzeugenden Elementen 66 jeweils zwei Wellrippenelemente 64 an. Mit anderen Worten liegt an jeder Seite eines Wärme erzeugenden Elementes 66 eine Lage L von Wellrippenelementen an. Der Vergleich zwischen Figur 4 und Figur 11 verdeutlicht ferner, dass bei dem Ausführungsbeispiel nach Figur 4 in einer Lage zumindest zwei Wellrippenelemente 64 angeordnet sind.

Nachdem sämtliche Elemente des Schichtaufbaus 46 in das Rahmenelement 48 eingelegt worden sind, wird der Rahmen 44 durch Auflegen und Verrasten des anderen Rahmenelementes 48 geschlossen. Danach werden über die Federeinbringöffnungen 120 die jeweiligen Federelemente 121 zwischen den Schichtaufbau 46 und einem äußeren Rand der durch den Rahmen 44 geschaffenen Aufnahme 60 eingeschoben. Schließlich werden die Federelemente 121 gegeneinander verspannt, wie dies in der EP 2 298 582 beschrieben ist. Danach wird das so vorbereitete Leistungsteil 2 mit der Metallschale 8 und dem Kunststoffgehäuseelement 10 gefügt. Die Rampenflächen 124 dienen aufgrund ihrer spitz zulaufenden Ausgestaltung dabei als Positionier- und Zentrierhilfen, so dass das Halteelement 126 effektiv in die Positionieröffnung 127 eingebracht werden kann. Das Halteelement 126 ist dabei üblicherweise relativ zu den Kontaktstiften 96 vorlaufend, so dass erst über die Halteelemente 126 eine Grobpositionierung vorgenommen wird und danach die Kontaktstifte 96 in die zylindrischen Aufnahmestutzen 132 eingebracht werden.

### Verbesserte Wärmeübertragung

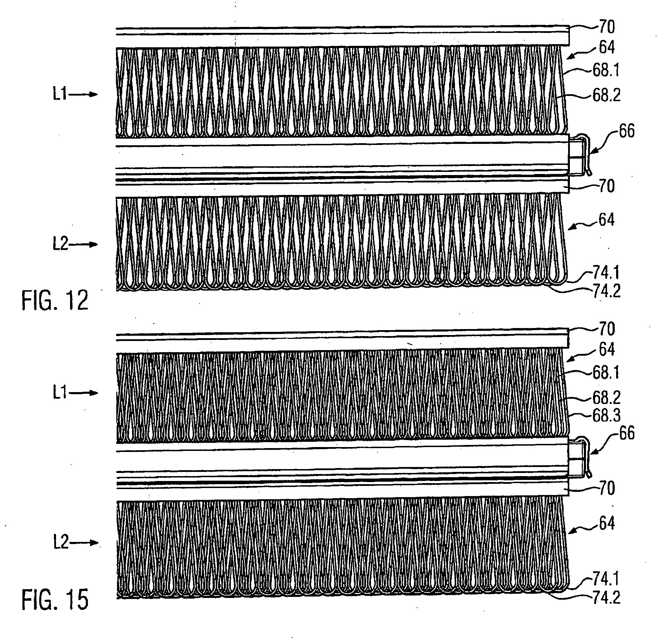

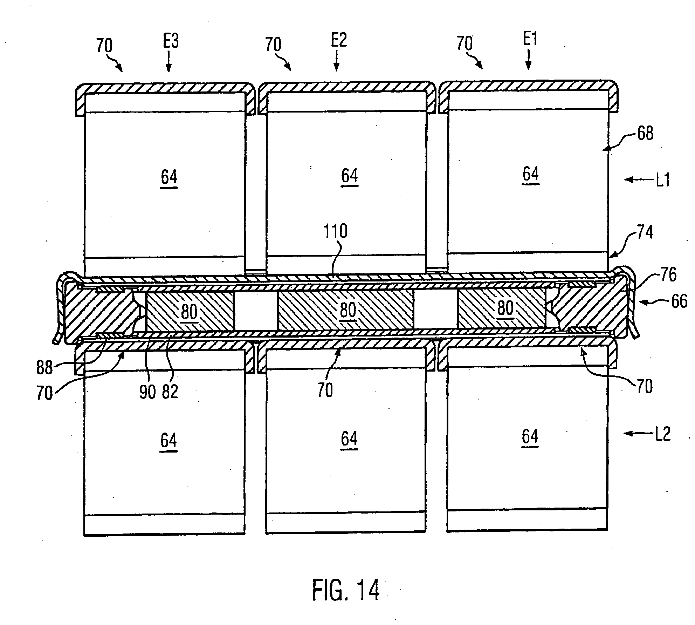

Die Figuren 12 bis 15 verdeutlichen einen weiteren Aspekt der vorliegenden Erfindung, der darin besteht, dass die in einer Lage L in Strömungsrichtung hintereinander vorgesehenen Wellrippenelemente 64 in einer Richtung quer zu der Durchströmungsrichtung S jedoch in ihrer entsprechenden Einbauebene innerhalb des Schichtaufbaus 46 versetzt zueinander vorgesehen sind. Dementsprechend sind in der in Figur 12 gezeigten vergrößerten Seitenansicht eines Heizstabes 62 die mäandrierend gebogenen Blechstreifen 68 der in einer Lage L hintereinander vorgesehenen Wellrippenelemente 64 erkennbar. Diese sind mit Bezugszeichen 68.1 und 68.2 gekennzeichnet und damit unterscheidbar. Es ergibt sich, dass die rechtwinklig zu der Zeichenebene anströmende zu erwärmende Luft nahezu vollständig separate mäandrierend gebogene Blechstreifen 68.1 und 68.2 anströmt. Insbesondere wird das hintere Blechstreifenelement nicht von dem vorderen abgeschattet. Es ergibt sich ein guter Wärmeübergang. Darüber hinaus wird der zu erwärmende Luftstrom S beim Übergang von der ersten Ebene E1 auf die zweite Ebene E2 umgeschichtet, was mit turbulenter Strömung einhergeht, wodurch ebenfalls die Wärmeübertragung verbessert wird.

Die Figuren 13 bis 15 zeigen ein zweites Ausführungsbeispiel entsprechend den Figuren 10 bis 12. Das gezeigte Ausführungsbeispiel eines Heizstabs unterscheidet sich lediglich dadurch von dem zuvor diskutierten Ausführungsbeispiel, dass in einer Lage L1 bzw. L2 drei Wellrippenelemente 64 hintereinander angeordnet sind. Auch dort sind jeweils in einer Ebene E1, E2, E3 angeordnete Wellrippenelemente 64 jeweils streng einem PTC-Element 80 zugeordnet. Wie Figur 15 verdeutlicht, wird die den Heizstab 62 durchströmende Luft mehrfach umgeschichtet. Das durch die jeweils zueinander versetzt vorgesehenen mäandrierenden Blechstreifen 68 gebildete Labyrinth aus Blechstreifen 68.1, 68.2 und 68.3 führt zu einer sehr guten Wärmeübertragung und Leistungsausbeute.

### Modularer Aufbau des Rahmens

Figur 16 zeigt die bereits zuvor beschriebenen Rahmenelemente 48 sowie ein Rahmenzwischenelement 190, das mit weiblichen und männlichen Rastelementen 50, 52 entsprechend den Rahmenelementen 48 versehen ist, so dass das Rahmenzwischenelement 190 auf einfach Weise zwischen den Rahmenelementen 48 verrastet werden kann. Die in dem Rahmen vorgesehene Aufnahme 60 für den Schichtaufbau 46 wird damit um genau diejenige Breite vergrößert, die eine Ebene von Wellrippenelementen 46 beiträgt. Bei den in den Figuren 10 bis 15 gezeigten Ausführungsbeispielen von Heizstäben 62 sind die Wärme erzeugenden Elemente 66 jeweils einheitlich ausgebildet, d.h. ob nun zwei PTC-Elemente 80 in Strömungsrichtung S hintereinander angeordnet sind oder drei PTC-Elemente 80; die PTC-Elemente 80 sind jeweils innerhalb eines einheitlichen Positionsrahmens 76 aufgenommen. Die Wellrippenelemente 64 sind indes identisch. Für die mit drei nebeneinander angeordneten Wellrippenelementen 64 versehenen Heizstäbe 62 und die mit zwei Wellrippenelementen 64 versehenen Heizstäbe 62 kann jeweils ein identisches Kunststoffgehäuseelement 10 verwendet werden. Denn auch das Rahmenzwischenelement 190 hat Halteelementteile 122, die mit den Halteelementteilen 122 eines der Rahmenelemente 48 zusammenwirken, um ein vollständiges Halteelement 126 auszubilden, über welches auch der verbreiterte Rahmen 44 nach Figur 16 mit dem Kunststoffgehäuseelement 10 verbindbar ist. Sollten beispielsweise vier Wellrippenelemente 64 in Strömungsrichtung hintereinander einen Heizstab ausbilden, so kann ein zweites Rahmenzwischenelement 190 in den Rahmen 44 eingebaut werden.

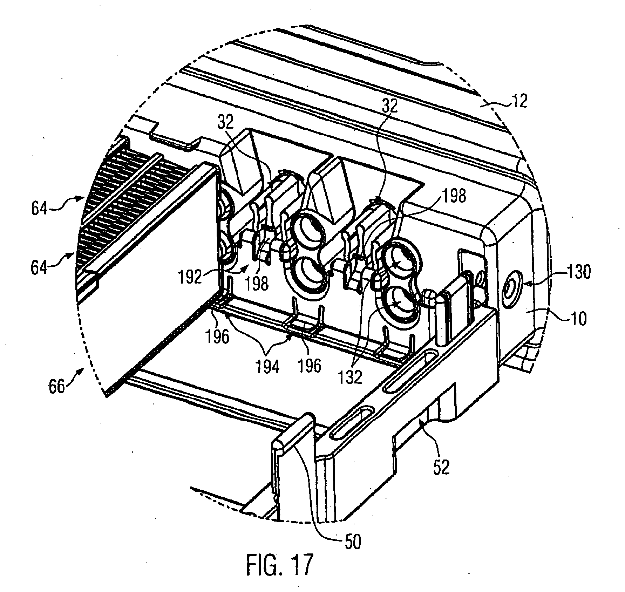

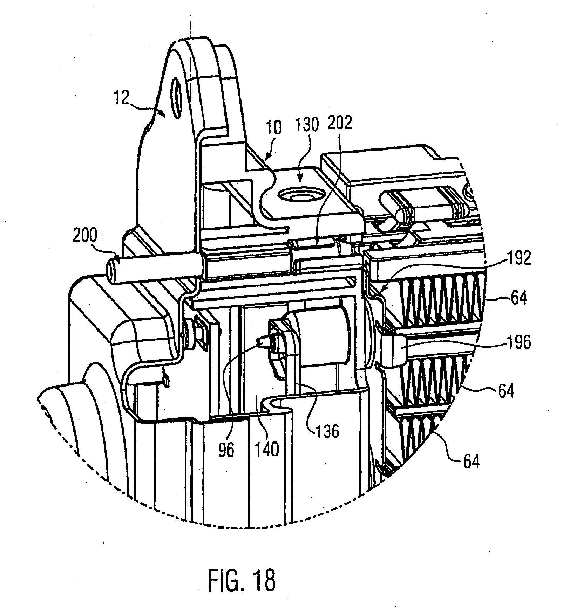

Die Figuren 17 und 18 zeigen ein gegenüber dem zuvor beschriebenen Ausführungsbeispiel leicht abgewandeltes Ausführungsbeispiel. Gleiche Bauteile sind mit gleichen Bezugszeichen gekennzeichnet. Bei dem in den Figuren 17 und 18 gezeigten Ausführungsbeispiel ist insbesondere das zuvor beschriebene Abschirmgehäuseelement 8 abgewandet.

Statt eines schalenförmigen, das Kunststoffgehäuseelement 10 aufnehmenden Gehäuseelementes ist ein Abschirmkontaktblech 192 vorgesehen, welches formschlüssig an äußeren Anlageflächen des Kunststoffgehäuseelementes 10 anliegt. Dieses bildet darüber hinaus Ausbuchtungen 194 aus, in welchen Abschirmkontaktzungen 196 des Abschirmkontaktbleches 192 aufgenommen sind. Die Abschirmkontaktzungen 196 sind jeweils auf Höhe eines Wärme erzeugenden Elementes 66 vorgesehen und kontaktieren den Rand 112 dieses Elementes 66. Ferner bildet das Abschirmkontaktblech 192 durch Stanzen und Biegen ausgeformte Federstege 198 aus, die an der Stirnseite jeweils eines der Kühlkörper 32 anliegen und mit diesem kontaktieren. Wie insbesondere Figur 18 zu entnehmen ist, umgibt das Abschirmkontaktblech 192 eng die zylindrische Stutzenaufnahme 132, die durch das Kunststoffgehäuseelement 10 gebildet wird.

Wie des Weiteren insbesondere aus Figur 18 zu entnehmen ist, weist das in den Figuren 17 und 18 verdeutlichte Ausführungsbeispiel einen auf Masse liegenden Anschlussbolzen 200 auf. Dieser Anschlussbolzen 200 ist beispielsweise durch Umspritzen in dem Kunststoffgehäuseelement 10 gehalten. Das mit dem Kunststoffgehäuseelement 10 verclipste Abschirmkontaktblech 192 bildet eine durch Stanzen und Biegen ausgeformte Bolzenaufnahme 202 aus, die unter elastischer Umfangsspannung an dem Anschlussbolzen 200 elektrisch leitend anliegt.

Es ergibt sich eine vollständige Abschirmung sämtlicher, an der Stromführung beteiligter Elemente des Ausführungsbeispiels. Des Weiteren sind die Kühlkörper 32 über das Abschirmkontaktblech 192 auf Masse gelegt, so dass die zuverlässige elektrische Isolierung zwischen dem Leistungsschalter 178 und dem Kühlkörper 32 durch Überwachen des Massepotentials abgegriffen an dem Anschlussbolzen 200 überprüft werden kann. Ein etwaiger Defekt in der elektrischen Isolierung kann detektiert und ausgegeben werden, um zu verhindern, dass bei Wartungsarbeiten an der elektrischen Heizvorrichtung bei unzureichender elektrischer Isolierung das Wartungspotential einen Stromschlag erleidet.

### Bezugszeichenliste

- 2: Leistungsteil
- 4: Steuerteil
- 6: Anschlussgehäuse
- 8: Abschirmgehäuse/Metallschale
- 10: Kunststoffgehäuseelement
- 12: Gehäusedeckel
- 14: weibliches Leistungssteckergehäuse
- 16: weibliches Steuersteckergehäuse
- 18: Leiterplatte
- 20: Druckelement
- 22: Plusanschlusssteckkontakt
- 24: Minusanschlusssteckkontakt
- 26: Steuerkontaktelement
- 28: Anschlussbolzen/Masse
- 30: Kühlkanal
- 32: Kühlkörper
- 34: Luftdurchtrittskanal
- 36: Durchtrittsöffnung
- 38: Verriegelungsöffnung
- 40: Rastnase
- 42: Befestigungsbohrung
- 44: Rahmen
- 46: Schichtaufbau/Heizblock
- 48: Rahmenelement
- 50: männliches Rastelement
- 52: weibliches Rastelement
- 54: Außenseite des Rahmens
- 56: Öffnung
- 58: Querstrebe
- 60: Aufnahmeraum
- 62: Heizstab
- 64: Wellrippenelement
- 66: Wärme erzeugendes Element
- 68: mäandrierend gebogener Blechstreifen
- 70: Blechabdeckung
- 72: Rand
- 74: freies Ende des Wellrippenelementes des gebogenen Blechstreifens
- 76: Positionsrahmen
- 78: Aufnahme
- 80: PTC-Element
- 82: Kontaktblech
- 84: Umfangsspalt
- 86: Dichtnut
- 88: Kleberand
- 90: Isolierlage
- 92: Anschlussstutzen
- 94: Kanal
- 96: Kontaktstift
- 98: Dichtelement
- 100: weibliche Clipselementaufnahme
- 102: versetzter Vorsprung
- 104: Clipsöffnung
- 106: Clipsöffnung
- 108: Clipssteg
- 110: Blechabdeckung
- 112: Rand
- 114: Randfläche
- 116: Prüfkanal
- 118: Ansatzbereich für den Rand 112
- 120: Federeinbringöffnung
- 121: Federelement
- 122: Halteelementteil
- 124: Rampenfläche
- 126: Halteelement
- 127: Positionieröffnung
- 128: Nut
- 130: Bohrung
- 132: zylindrische Stutzenaufnahme
- 134: erstes Plus-Kontaktflächenelement
- 136: Minus-Kontaktflächenelement
- 138: zweites Plus-Kontaktflächenelement
- 140: Trennsteg
- 142: Anlageflächen der Anlageebene
- 143: Aussparung
- 144: erste Plus-Kontaktzunge
- 145: Verbindungslaschen
- 146: Minus-Kontaktzunge
- 148: Kontaktzungenhaltebereiche
- 150: Kontaktvorsprung
- 152: Verriegelungsvorsprung
- 154: Verriegelungsöffnung
- 156: Klemmsegment
- 158: Anlagefläche
- 160: Befestigungsauge
- 162: Wabenstege
- 164: Kühlkörpereinbringöffnung
- 166: Rastpfosten
- 168: Rastschulter
- 170: Raststeg
- 172: Dichtelement
- 174: Abdichtaufnahme
- 176: Unterseite
- 178: Leistungsschalter
- 180: Bohrung
- 182: Drucksteg
- 184: Isolierschicht
- 186: zweite Plus-Kontaktzunge
- 188: Vorsprünge/Stützstellen
- 190: Rahmenzwischenelement
- 192: Abschirmkontaktblech
- 194: Ausbuchtung
- 196: Abschirmkontaktzunge
- 198: Federsteg
- 200: Anschlussbolzen
- 202: Bolzenaufnahme
- L: Lage
- E: Ebene
- S: Strömungsrichtung

## Patentansprüche

1. Elektrische Heizvorrichtung, insbesondere für ein Kraftfahrzeug mit einem Rahmen (44), der an gegenüberliegenden Seiten Öffnungen (56) für den Durchtritt eines zu erwärmenden Mediums ausbildet, einem in dem Rahmen (44) angeordneten Schichtaufbau (46), der Lagen von Wellrippen- und Wärme erzeugenden Elementen (64; 66) umfasst, wobei das Wärme erzeugende Element (66) wenigstens ein zwischen parallelen Kontaktblechen (82) angeordnetes PTC-Element (80) hat, und einem Anschlussgehäuse (6), in dem wenigstens ein Verlustleistung erzeugender Leistungsschälter (178) vorgesehen ist, dem ein außen an dem Anschlussgehäuse (6) freiliegender Kühlkörper (32) zugeordnet ist, der wärmeleitend an dem Leistungsschalter (178) anliegt,
**dadurch gekennzeichnet,**
**dass** der Kühlkörper (32) dichtend über ein auf Höhe einer Durchtrittsöffnung (36) für den Kühlkörper (32) vorgesehenes Dichtelement (172), welches einen Spalt zwischen dem Kühlkörper (32) und den Konturen des Anschlussgehäuses (6) überbrückt und abdichtet, und mit einer ebenen Anlagefläche (158) unter Vorspannung an dem Leistungsschalter (178) anliegend in das Anschlussgehäuse (6) eingesetzt ist.

2. Elektrische Heizvorrichtung nach Anspruch 1, **dadurch gekennzeichnet, dass** der Leistungsschalter (178) durch eine Kompression des Dichtelementes (172) unter Vorspannung an dem Kühlkörper (32) anliegt.

3. Elektrische Heizvorrichtung, nach Anspruch 1 oder 2, **dadurch gekennzeichnet, dass** der Kühlkörper (32) einen Raststeg (170) aufweist, der zwischen einer an dem Anschlussgehäuse (6) vorgesehenen Rastschulter (168) und dem Dichtelement (172) vorgesehen ist.

4. Elektrische Heizvorrichtung nach einem der vorherigen Ansprüche, **gekennzeichnet durch** ein Druckelement(20), welches auf einer dem Kühlkörper (32) abgewandten Seite auf den Leistungsschalter (178) wirkt.

5. Elektrische Heizvorrichtung nach Anspruch 4, **dadurch gekennzeichnet, dass** das Druckelement (20) als ein Kunststoffwabenteil ausgebildet und mit dem Anschlussgehäuse (6) verbunden ist.

6. Elektrische Heizvorrichtung nach Anspruch 4 oder 5, **dadurch gekennzeichnet, dass** das Druckelement (20) auf mehrere Leistungsschalter (178) einwirkt.

7. Elektrische Heizvorrichtung nach einem der Ansprüche 4 bis 6, **dadurch gekennzeichnet, dass** der Leistungsschalter (178) auf der dem Kühlkörper (32) abgewandten Unterseite einer Leiterplatte (18) angeordnet ist.

8. Elektrische Heizvorrichtung nach einem der Ansprüche 4 bis 7, **dadurch gekennzeichnet, dass** das Druckelement (20) unmittelbar gegen den Leistungsschalter (178) anliegt.

9. Elektrische Heizvorrichtung nach einem der Ansprüche 4 bis 8, **dadurch gekennzeichnet, dass** der Kühlkörper (32) unter Zwischenlage einer Isolierschicht (184) an dem Leistungsschalter (178) anliegt.

## Claims

1. Electrical heating device, particularly for a motor vehicle, with a frame (44) that forms on oppositely situated sides openings (56) for the passage of a medium that is to be heated, a layer structure (46) arranged in the frame (44) that comprises layers of corrugated-rib and heat generating elements (64; 66), wherein the heat generating element (66) has at least one PTC element (80) arranged between parallel contact plates (82), and a connecting housing (6) in which is provided at least one power dissipation generating power switch (178) to which is assigned a heat sink (32) that lies exposed on the outside of the connecting housing (6), said heat sink abutting the power switch (178) in a thermally conducting manner,
**characterised in that**
the heat sink (32) is inserted into the connecting housing (6) in a sealing manner via a sealing element (172) located at the height of a passage opening (36) for the heat sink (32), which sealing element (172) bridges and seals a gap between the heat sink (32) and the contours of the connecting housing (6), wherein the heat sink (32) is inserted into the connecting housing (6) such that it abuts, with a flat contact base (158), the power switch (178) under tension.

2. Electrical heating device according to Claim 1, **characterised in that** the power switch (178) by compression of the sealing element (172) abuts the heat sink (32) under tension.

3. Electrical heating device according to Claim 1 or 2, **characterised in that** the heat sink (32) exhibits a latching ridge (170) that is provided between a latching shoulder (168) provided on the connecting housing (6) and the sealing element (172).

4. Electrical heating device according to any of the preceding Claims, **characterised by** a pressure element (20) which acts on the power switch (178) on a side that faces away from the heat sink (32).

5. Electrical heating device according to Claim 4, **characterised in that** the pressure element (20) is formed as a plastic honeycomb part and is joined to the connecting housing (6).

6. Electrical heating device according to Claim 4 or 5, **characterised in that** the pressure element (20) acts on several power switches (178).

7. Electrical heating device according to any of the Claims 4 to 6, **characterised in that** the power switch (178) is arranged on a conductor board (18) on an underside that faces away from the heat sink (32).

8. Electrical heating device according to any of the Claims 4 to 7, **characterised in that** the pressure element (20) abuts directly against the power switch (178).

9. Electrical heating device according to any of the Claims 4 to 8, **characterised in that** the heat sink (32) abuts the power switch (178) with an intermediate positioning of an insulating layer (184).

## Revendications

1. Dispositif de chauffage électrique, en particulier pour un véhicule automobile, avec un cadre (44) qui forme sur des côtés opposés des ouvertures (56) pour le passage d'un milieu à chauffer, une structure en couches (46) disposée dans le cadre (44) qui comprend des couches de nervures ondulées et des éléments générateurs de chaleur (64; 66), l'élément générateur de chaleur (66) présentant au moins un élément PTC (80) disposé entre des plaques de contact parallèles (82), et un boîtier de raccordement (6) dans lequel est prévu au moins un interrupteur de puissance (178) générant une dissipation de puissance, auquel est associé un dissipateur thermique (32) qui est exposé sur le côté extérieur du boîtier de raccordement (6) et qui s'applique de manière thermoconductrice contre l'interrupteur de puissance (178),
**caractérisé en ce que**
le dissipateur de chaleur (32) est inséré de manière étanche dans le boîtier de raccordement (6) par l'intermédiaire d'un élément d'étanchéité (172) situé à la hauteur d'une ouverture de passage (36) pour le dissipateur de chaleur (32), lequel élément d'étanchéité (172) ponte et rend étanche une fente entre le dissipateur de chaleur (32) et les contours du boîtier de raccordement (6), le dissipateur de chaleur (32) étant inséré dans le boîtier de raccordement (6) de telle sorte qu'il s'appuie, avec un fond de contact plat (158), sur l'interrupteur de puissance (178) sous tension.

2. Dispositif de chauffage électrique selon la revendication 1, **caractérisé en ce que** l'interrupteur de puissance (178), par compression de l'élément d'étanchéité (172), s'appuie sous tension contre le dissipateur de chaleur (32).

3. Dispositif de chauffage électrique selon les revendications 1 ou 2, **caractérisé en ce que** le dissipateur thermique (32) présente une nervure d'encliquetage (170) qui est prévue entre un épaulement d'encliquetage (168) prévu sur le boîtier de raccordement (6) et l'élément d'étanchéité (172).

4. Dispositif de chauffage électrique selon l'une des revendications précédentes, **caractérisé par** un élément de pression (20) qui agit sur l'interrupteur de puissance (178) sur un côté qui est tourné à l'opposé du dissipateur de chaleur (32).

5. Dispositif de chauffage électrique selon la revendication 4, **caractérisé en ce que** l'élément de pression (20) est formé comme une pièce alvéolaire en plastique et est relié au boîtier de raccordement (6).

6. Dispositif de chauffage électrique selon les revendications 4 ou 5, **caractérisé en ce que** l'élément de pression (20) agit sur plusieurs interrupteurs de puissance (178).

7. Dispositif de chauffage électrique selon l'une des revendications 4 à 6, **caractérisé en ce que** l'interrupteur de puissance (178) est disposé sur une plaque conductrice (18) sur une face inférieure qui est tournée à l'opposé du dissipateur de chaleur (32).

8. Dispositif de chauffage électrique selon l'une des revendications 4 à 7, **caractérisé en ce que** l'élément de pression (20) est en contact direct avec l'interrupteur de puissance (178).

9. Dispositif de chauffage électrique selon l'une des revendications 4 à 8, **caractérisé en ce que** le dissipateur de chaleur (32) est en butée contre l'interrupteur de puissance (178) avec un positionnement intermédiaire d'une couche isolante (184).
